# EUROPEAN PATENT APPLICATION

(11) **EP 4 235 425 A1**
(43) Date of publication of application: **30.08.2023**
(21) Application number: 22215395.9
(22) Date of filing: 21.12.2022
(51) Int. Cl.: G06F 9/50

(54) **USER INTERFACE FOR 5G NETWORK SLICE PROVISIONING**

(30) Priority: 28.02.2022 GR 20220100183; 01.11.2022 US 202218051632
(71) Applicant: Juniper Networks, Inc., Sunnyvale, CA 94089 (US)
(72) Inventor: KOZLOVA, Yelena, Sunnyvale, 94086 (US); NESTEROFF, Lyubov, Sunnyvale, 94089 (US); GUPTA, Ojas, Sunnyvale, 94089 (US); POLYCHRONOPOULOS, Constantine Dimitrois, Sunnyvale, 94089 (US); AKMAN, Arda, Sunnyvale, 94089 (US); TIDEMANN, Jeremy Alan, Sunnyvale, 94089 (US); OIKONOMOU, Georgios, Sunnyvale, 94089 (US); CHOH, Edward Wai Hong, Sunnyvale, 94089 (US); BORDELEAU, Marc-Andre, Sunnyvale, 94089 (US)
(74) Representative: D Young & Co LLP

(57) **Abstract**

An example network provisioning system displays a user interface comprising a first plurality of icons, each icon of the first plurality of icons representing a cloud provider or a data center associated with a network slice. The network provisioning system receives, via the user interface, a selection of a first icon of the first plurality of icons. Responsive to the selection of the first icon, the network provisioning system displays a second plurality of icons via the user interface. Each icon of the second plurality of icons represents a resource group hosted by a cloud provider or data center represented by the first icon. In some examples, the network slice is a 5G communication slice.

It is intended that, when published, the abstract be accompanied by Figure 1.

## Description

This application claims the benefit of US Patent Application No. 18/051,632, filed 1 November 2022 and of GR Patent Application No. 20220100183, filed 28 February 2022, the entire content of each application is incorporated herein by reference.

### TECHNICAL FIELD

The disclosure relates to computer networking, and more specifically, to ordering and provisioning communication services in a network.

### BACKGROUND

Computer networks have become ubiquitous, and the number of network applications, network-connected devices, and types of network-connected devices are rapidly expanding. Such devices now include computers, smart phones, Internet-of Things (IoT) devices, vehicles, medical devices factory equipment, etc. 5G network architectures enhanced the ability to provide communication services using network function virtualization (NFV). Specialized networks can be created using the Radio Access Network (RAN) of a mobile network operator combined with functions of a 5G core. For example, networks can be created for a specific service level agreement (SLA), special use cases, or other specific requirements. Examples of such networks include private mobile networks, industrial networks, a dedicated network for connected vehicles, etc.

### SUMMARY

Particular embodiments are set out in the independent claims. Various optional examples are set out in the dependent claims. In general, the disclosure describes techniques for a user interface which enables on-demand provisioning of cloud services in a network, for example, a 5G network, as well as scalable visualization of the elements forming the network. A network service, such as a network slice, may be formed from various elements and sub-elements, such as clouds, cloud providers, data centers, resource groups, resources, clusters, manager nodes, and worker nodes. In some examples, a user, such as a network operator, may desire to deploy thousands or tens of thousands of clouds and/or resources in an inventory to support the network service. However, a network slice may include an extremely large number of clouds and resources, and a user may be unable to use conventional tools to visualize such large numbers of clouds and resources. For example, conventional tools may be unable to effectively illustrate a large number of elements, or may be unable to illustrate the different elements of a service in an effective manner that facilitates administration and does not obscure relevant information. Using the techniques disclosed herein, a user interface is described which may enable a user to visualize these large numbers of clouds and resources in a simple manner on a single pane of glass in a scalable manner. For example, a hierarchical user interface is described herein which may provide expanding, collapsing, filtering, and grouping capabilities when displaying large numbers of clouds to a user. The user inface described herein may enable a user to manage vast numbers of clouds or resources on the same screen with a seamless way to interact with the infrastructure of the clouds or resources without requiring the user to toggle between multiple views.

A network service provider can provide a portal to a network provisioning system where the portal presents visual cues via a user interface that provides visualizations of the service provisioning process and receives user input that, in some cases, can be selected from the visualizations. In some aspects, the user can be a tenant (e.g., a customer) of a 5G mobile network operator. As an example, the tenant may be an enterprise customer of the mobile network operator. In some aspects, the user can be an administrator of a 5G network service provider.

Provisioning a service in a 5G network domain can involve multiple services and multiple service providers. For example, provisioning an end-to-end 5G network slice may involve provisioning network functions to support the network slice in multiple geographically-distributed data centers ("multi-cloud") and may further involve services provided and implemented in multiple network domains ("multi-domain") such as RAN, transport networks, core network services, and via core interfaces (e.g., the SGi interface). The different services and network domains may have different capabilities, functions, and service levels. A tenant may want to provision a complete communication service, and in some cases related network slices, to a network infrastructure owned or leased by the tenant. Existing systems may be unable to effectively illustrate the network slice, as well as the various elements and sub-elements that form the network slice, such as clouds, cloud providers, data centers, resource groups, resources, clusters, manager nodes, and worker nodes.

As described herein, a tenant (or network service provider for a provider-owned slice, or another party) can initiate, on-demand, provisioning of a communication service, such as a network slice, with a pre-defined service level agreement (SLA) and network slice templates (NSTs), and the tenant can specify different attributes of the service, e.g., tracking areas, compute clouds / data centers, allowed subscribers, network slice selection policies, etc. A network provisioning system may facilitate a service order creation process that can be used by an end-user to request on-demand provisioning of an end-to-end network that can be created for specific SLA, use cases, and user requirements. In some aspects, the end-user can be a tenant of a mobile network operator that can provision communication services on an on-demand basis.

According to the techniques disclosed herein,, the network provisioning system may provide a user interface which displays various elements of the network slice in a hierarchical fashion. For example, the user interface may display a visualization of a network slice comprising first icons, each first icon of which represent a cloud provider or a data center associated with a network slice. Responsive to a selection of a first icon, the user interface may display a visualization of the cloud provider or a data center represented by the first icon, the visualization of the cloud provider or a data center comprising second icons. Each second icon of which represents a resource group hosted by the cloud provider or data center represented by the first icon. Responsive to a selection of a second icon, the user interface may further depict a visualization of the resource group that includes third icons, each third icon of which represents a resource or cluster associated with the resource group represented by the second icon. Furthermore, responsive to a selection of a third icon, the user interface may further depict a visualization of the resource or cluster that includes fourth icons, each fourth icon of which represents a manager node or a worker node associated with the resource represented by the third icon.

In some examples, the user interface may apply grouping logic to group elements that form the network slice, such as clouds, cloud providers, data centers, resource groups, resources, clusters, manager nodes, or worker nodes, with other like elements. The user interface may thereafter represent such a group of elements with a single icon, thereby illustrating the various elements of the network slice in a scalable and efficient manner.

In some examples, the user interface may apply filtering logic so as to filter out elements that form the network slice, such as clouds, cloud providers, data centers, resource groups, resources, clusters, manager nodes, or worker nodes, to as to arrive at a subset of the elements that match with certain criteria. In some examples, the user interface may receive the criteria from a user. The user interface may thereafter display the subset of elements, thereby facilitating search capabilities, management, and administration of the various elements forming the network slice.

A network service provider such as a mobile network operator can utilize the techniques described herein to provide networking as a service (NaaS) to their customers, as well as to facilitate management and administration of networking services. For example, the techniques can facilitate end-user and on-demand provisioning of private mobile networks. Examples of such private mobile networks include dedicated networks for connected vehicles, Internet-of Things (IoT) networks, networks for industries etc. In some aspects, the network service provider may create, on demand, a network slice having QoS and other parameters based on a service order generated by a tenant or other end-user via an interface implementing techniques described herein. Furthermore, the techniques may reduce the expense of management and administration by enhancing visualization and understanding of the various elements forming the network slice.

The techniques disclosed herein include a provisioning portal that provides a user interface facilitating creation of service orders by tenants and other clients of a network operator. The user interface can lead a user through a series of operations of a workflow that can result in the creation of a service order that can instruct a provisioning system to configure and deploy a network service for the user. In some aspects, the communication service can be localized to a particular geographic area by providing an interface for a user to select components involved in providing the communication service from a map. The techniques disclosed herein can provide a technical advantage over previous systems by enabling end-users to perform on-demand provisioning of communication services. As a practical application of the techniques described in this disclosure, a provisioning portal can be used by an end-user tenant of a network operator to provision communication services of the network operator for use by the tenant. The provisioning portal can facilitate an end-user ordering a network service and have the network service provisioned on-demand without involving mobile network operator personnel. As a result, a tenant may be able to receive the benefits of the communication server sooner when compared with existing systems. Further, there may be less overhead for a mobile network operator.

In one example, this disclosure describes a method comprising: displaying, by processing circuitry and via a user interface, a first plurality of icons, each icon of the first plurality of icons representing a cloud provider or a data center associated with a network slice; receiving, by the processing circuitry and via the user interface, a selection of a first icon of the first plurality of icons; and responsive to the selection of the first icon, displaying, by the processing circuitry and via the user interface, a second plurality of icons, each icon of the second plurality of icons representing a resource group hosted by the cloud provider or data center represented by the first icon.

In another example, this disclosure describes a computing system comprising processing circuitry having access to a memory, the processing circuitry configured to: display, via a user interface, a first plurality of icons, each icon of the first plurality of icons representing a cloud provider or a data center associated with a network slice; receive, via the user interface, a selection of a first icon of the first plurality of icons; and responsive to the selection of the first icon, display, via the user interface, a second plurality of icons, each icon of the second plurality of icons representing a resource group hosted by the cloud provider or data center represented by the first icon.

In another example, this disclosure describes a method comprising: displaying, by processing circuitry and via a user interface, a representation of a network slice comprising first icons, each icon of the first icons representing a cloud provider or a data center associated with the network slice; responsive to a selection of a first icon of the first icons, displaying, by the processing circuitry and via the user interface, second icons, each icon of the second icons representing a resource group hosted by the cloud provider or data center represented by the selected first icon; responsive to a selection of a second icon of the second icons, displaying, by the processing circuitry and via the user interface, third icons, each icon of the third icons representing a resource of the resource group represented by the selected second icon; responsive to a selection of a third icon of the third icons, displaying, by the processing circuitry and via the user interface, fourth icons, each icon of the fourth icons representing one of a manager node or a worker node of the resource represented by the selected third icon; and responsive to a selection of a fourth icon of the fourth icons, displaying, by the processing circuitry and via the user interface, information about the one of the manager node or the worker node represented by the selected fourth icon.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example network system, according to techniques of the disclosure.
FIG. 2 is a conceptual view of a user interface for adding a network slice template, according to techniques of the disclosure.
FIGS. 3A-3G are conceptual views of user interfaces for provisioning a network service, according to techniques of the disclosure.
FIG. 4 is a conceptual view of a user interface showing service order status, according to techniques of the disclosure.
FIG. 5 is a flow chart illustrating operations of a method for provisioning network services, according to techniques of the disclosure.
FIG. 6 is a block diagram illustrating further details of one example of a computing device that operates in accordance with one or more techniques of the present disclosure.
FIG. 7 is a conceptual view of a user interface for managing clouds and resources of a network slice, according to techniques of the disclosure.
FIG. 8 is a conceptual view of a user interface for managing clouds and resources of a network slice, according to techniques of the disclosure.
FIG. 9 is a conceptual view of a user interface for managing clouds and resources of a network slice, according to techniques of the disclosure.
FIGS. 10A-10H are conceptual views of a user interface for managing clouds and resources of a network slice, according to techniques of the disclosure.
FIG. 11 is a conceptual view of a user interface for managing clouds and resources of a network slice, according to techniques of the disclosure.
FIG. 12 is a conceptual view of a user interface for managing clouds and resources of a network slice, according to techniques of the disclosure.
FIG. 13 is a flowchart illustrating an example operation in accordance with the techniques of the disclosure.

### DETAILED DESCRIPTION

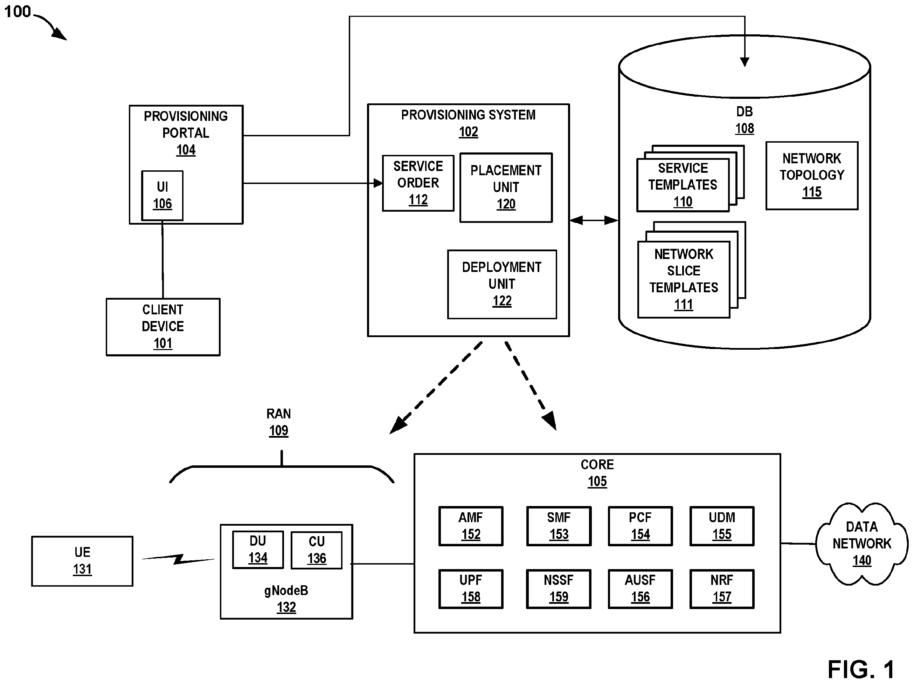

FIG. 1 is a block diagram illustrating an example network system, according to techniques of the disclosure. In the example illustrated in FIG. 1, network system 100 includes provisioning system 102, provisioning portal 104, one or more radio access networks (RANs) 109, and core 105. Provisioning system 102 provisions communication services for customer of a network operator, for example, a mobile network operator. As an example, a tenant may order a communication service from a mobile network operator. The desired service may be described in service order 112. Provisioning system 102 processes the service order and may assign communications infrastructure and resources needed to provide the desired service to the tenant based on information in service order 112.

In some aspects, resources associated with the service to the tenant may be provided by, or managed by, functions of core 105 and/or components of RAN 109. In some aspects, core 105 implements various discrete control plane and user plane functions for network system 100. In some aspects, core 105 includes 5G control plane functions such as Access Mobility Management Function (AMF) 152, Session Management Function (SMF) 153, Policy Control Function (PCF) 154, User Data Management (UDM) 155, Network Repository Function (NRF) 157, Authentication Server Function (AUSF) 156, and Network Slice Selection Function (NSSF) 159. AMF 152 may provide access mobility management services. SMF 153 may provide session management services. PCF 154 may provide policy control services. Unified Data Management (UDM) function 155 may manage network user data. AUSF 156 may provide authentication services. Network Repository Function (NRF) 157 may provide a repository that can be used to register and discover services in a network operator's network. Network Slice Selection Function (NSSF) 159 may be used to select an instance of an available network slice for use by a user equipment (UE) device 131. Core 105 may also include User Plane Functions (UPF) 158. UPF 158 may provide packet routing, forwarding and other network data processing functions (e.g., Quality of Service, packet inspection, traffic optimization etc.). Further details on services and functions provided by AMF 152, SMF 153, PCF 154, UDM 155, NRF 157, AUSF 156 NRF 157, UPF 158 and NSSF 159 can be found in 3rd Generation Partnership Project 2021, Technical Specification Group Services and System Aspects; System architecture for the 5G System (5GS); Stage 2 (Release 17), TS 23.501 V17.0.0 (2021-03), the entire contents of which is hereby incorporated by reference.

In some examples, RANs 109 include radio units (RUs) located at various cellular network sites ("cell sites"), along with distributed units (DUs) and centralized units (CUs). Each RU consists of an LO PHY and a RF transmitter. The LO PHY component may be implemented using specialized hardware for high-performance packet processing.

RUs can connect to DUs via a fronthaul network. The fronthaul network connects LO PHY and HI PHY and is used by RUs and DUs to implement the F2 interface of 5G. DUs manage the packet transmission of radio by the RUs. In some cases, such packet transmission conforms to the Common Packet Radio Interface (CPRI) and/or to the enhanced CPRI (eCPRI) standard, or to IEEE 1914.3. DUs may implement the Radio Link Control (RLC), Media Access Control (MAC), and the HI PHY layer. DUs are at least partially controlled by CUs.

DUs can connect to CUs via a midhaul network, which may be used by DUs and CUs to implement the F1 interface of 5G. CUs may implement the Radio Resource Control (RRC) and Packet Data Convergence Protocol (PDCP) layers. CUs connect to core 105 via a backhaul network. The midhaul and backhaul networks may each be wide area networks (WANs).

RANs 109 may include a gNodeB 102. In some examples of radio access networks 109 of network system 100, gNodeB 102 includes a CU 136 and a DU 134. CU 136 may support multiple DUs to implement multiple gNodeBs. Further, one or more RUs may be supported by a single DU 134.

Any DU may or may not be located at the cell site that includes the RU(s) supported by the DU. A DU may be located at a cell site, while other DUs may be located at a local data center and collectively support multiple RUs. Network system 100 may have radio access networks 109 that include many thousands of cell sites and gNodeBs.

Radio access networks 109 connect to core 105 to exchange packets with data network 140. Core 105 may be a 5G core network, and data network (DN) 140 may represent, for example, one or more service provider networks and services, the Internet, 3^{rd} party services, one or more IP-VPNs, an IP-multimedia subsystem, a combination thereof, or other network or combination of networks.

Provisioning portal 104 provides an interface for use by client device 101 to provision communication services. In some aspects, provisional portal 104 can present a user interface 106 that presents user interface elements (e.g., screens, menus, maps, etc.) as part of a workflow for provisioning a communication service. In some aspects, the user interface and workflow can be an "end-to-end" workflow such that when the workflow is completed, there is enough information available to provisioning portal to create service order 112 that can be used by provisioning system 102 for provisioning a desired communication service.

Client device 101 can be an end-user computing device that receives user interface 106 elements for presentation, via a display coupled to client device 101, to a user operating client device 101. User interface 106 may be presented in a web browser executed by client device. In some aspects, client device 101 may be operated by a tenant of a mobile network operator and used to order a desired communication service. In some aspects, client device 101 may be operated by mobile network operator personnel and used to provision communication services for tenants or for the use of the mobile network operator. For example, a mobile network operator may use the provisioning portal to provision slices to carry voice traffic, web browsing traffic, or other types of traffic.

Provisioning portal 104 can be communicatively coupled to client device 101 and provisioning system 102. In the example illustrated in FIG. 1, provisioning portal 104 is executed in a computing environment, which may be provided by a cloud service provider or at a branch office of the MNO. However, provisioning portal 104 may be executed in other environments. Provisioning portal 104 may be a component of provisioning system 102. Further, provisioning portal 104 may be a component of a server or other computing device in a data center, such as a data center of a mobile network operator. In addition, some operations attributed herein to provisioning system 102 or provisioning portal 104 may in various example be performed by either provisioning system 102 or provisioning portal 104.

In some aspects, communication services that may be provisioned using provisioning portal 104 include network slices. In 5G network environments, network slicing is a network architecture that facilitates creations of multiple virtualized and independent logical networks that are multiplexed over the same physical network infrastructure. A network slice can be logically isolated from other network slices and can be customized to meet service level expectations of an application that may be established by a service level agreement (SLA). In the example illustrated in FIG. 1, provisioning system 102 can create and allocate network slices on the mobile network operator's access network to data network 140.

In some aspects, mobile network operator may create network slice templates 111. A network slice template 111 can be a blueprint that defines various network slice attributes used to configure a network slice. For example, a network slice template can define networks and services used by a slice and interfaces to such networks and services. The template may be used to create a slice that may be tailored for a particular purpose. For example, network slice templates 111 may include a template for creating a network slice to carry video streams, a template for creating a network slice to carry cloud gaming network traffic, a template for creating a network slice to carry artificial reality traffic, etc.

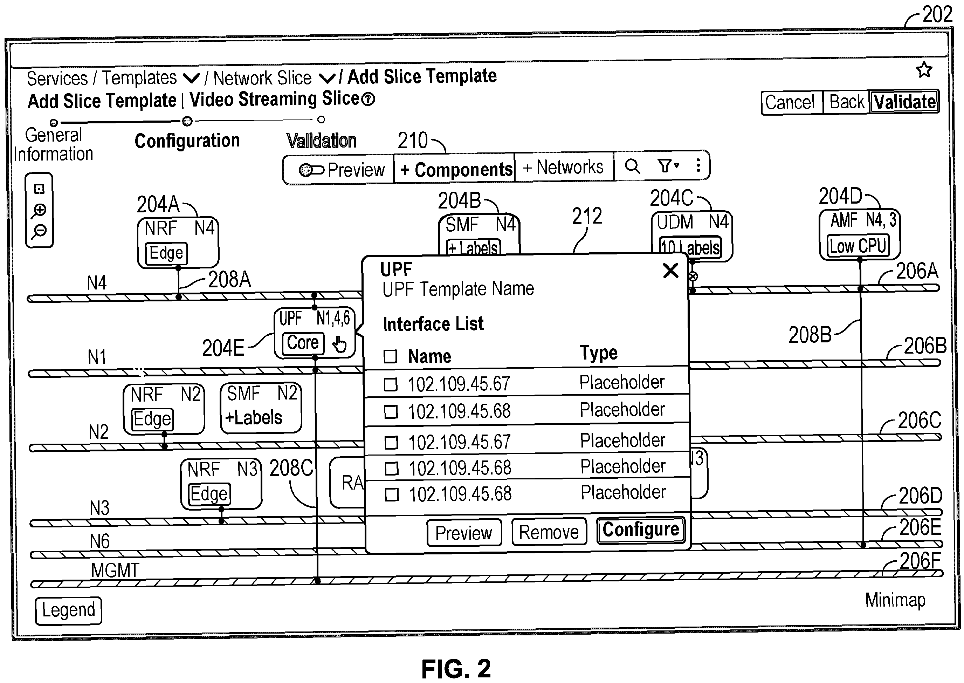

FIG. 2 is a conceptual view of a user interface for adding a network slice template, according to techniques of the disclosure. FIG. 2 will be discussed in conjunction with aspects of FIG. 1. Slice template screen 202 may be used, for example, by a mobile network operator to define network slice templates for use by tenants in ordering and provisioning communication services. In some aspects, slice template screen 202 may be provided by user interface 106 of provisioning portal 104. In the example illustrated in FIG. 2, interface screen 202 includes graphical elements representing components used to implement a network slice, including network functions 204A-204E, interfaces 206A-206F, and connections 208A-208C. In some aspects, a function 204 may be any of functions 152-159 of core 105. Slice template screen 202 can provide a user interface to incorporate network functions 204A-204E and network interfaces 206A-206F into a network slice template. Slice template screen 202 can also be used to create and display connections 208 between interfaces 204 and functions 206. Provisioning portal 104 may obtain available functions, interfaces, and other network infrastructure elements to use when defining a network slice template from network topology 115 of database 108.

A user may utilize slice template screen 202 to add slice components such as functions 204 and interfaces 206 using control 210 to a network slice definition. After functions 204 and interfaces 206 are added to a network slice template, the user may utilize the interface provided in screen 202 to connect functions to interfaces. In the example illustrated in FIG. 2, NRF function 204A has been connected to N4 interface 206A, AMF function 204D has been connected to N4 interface 206A and N3 interface 206D, UPF interface 204E has been connected to N4 interface 206A, N1 interface 206B, and N6 interface 206E. Interface 206F can be a virtual network that connects multiple network functions. In the example shown in FIG. 2, management interface 206F can be a virtual network with management capabilities that connects multiple network functions. The network slice template, once created, can be used as a blueprint to create video streaming slices.

In some aspects, a function 204 may be assigned one or more labels using slice template screen 202. In the example, illustrated in FIG. 2, NRF function 204A has been assigned a label "Edge," AMF function 204D has been assigned a label "Low CPU," and UPF function 204E has been assigned the label "Core." Other functions 204 shown in FIG. 2 have also been assigned labels. During deployment of a slice created using the template, provisioning system 102 may use a label for a function 204 to match functions used by the provisioned slice to network infrastructure such as compute clouds or compute nodes. For example, a function having an "Edge" label may indicate that it is desirable (or even mandatory) that provisioning system 102 assign the function to resources in an edge compute cloud. For instance, it may be desirable that NRF function 204A be available with low latency, thus making it more desirable for provisioning system 102 to locate NRF function 204A at an edge of the network slice infrastructure. In this case, NRF function 204A has been assigned an "Edge" label. As a further example, a "Core" label may indicate that it is desirable that the network function be assigned to resources closer to the core of the 5G network slice. For example, User Plane Function (UPF) 204 carries data between a data network and user equipment and it may be desirable to locate UPF 204 closes to the data network (e.g., closer to the core). Other location-related labels may include "regional" or "national". A "low CPU" label may indicate that the function does not require high performance processing capability and can thus be assigned to resources that utilize lower performance processors. A "SmartNIC" label may indicate the function should be deployed to a compute node having a SmartNIC. Other labels may indicate the type of orchestration system for deployed the labeled function, such as "OpenShift", "OpenStack", or "Kubernetes". If a data center or cloud is not capable of supporting a capability associated with a label, the data center or cloud is not able to host the labeled function and may not be selectable in the portal user interface 106 by the user.

In some aspects, a user may utilize slice template screen 202 to obtain further information from components displayed on screen 202. In the example shown in FIG. 2, a user has selected UPF function 204E and, in response, provisioning portal 104 displays, on screen 202, information box 212 about UPF function 204E, including information related to the in interfaces of UPF function 204E. Information box 212 can include control elements (e.g., buttons, menus etc.) to configure the selected element (UPF function 204E in this example), remove the selected element, or preview the selected element. In some aspects, in response to selection of the preview control element, provisioning portal 104 displays the constituent network functions, configuration, and interfaces of the selected element. If the element currently has no constituent elements, the preview control element may be disabled.

After a user has defined a network slice template, for example, using screen 202, the user may assign a name to the network slice template and save the network slice template in database 108 as one of network slice templates 111 for later use in the on-demand provisioning of service facilitated by network system 100.

Returning to FIG. 1, database 108 may also include service templates 110. A mobile network operator may define (perhaps using user interface 106) service templates 110. Service templates 110 can include various templates that have predefined network service attributes that may be appropriate for various types of communication services. For example, service templates 110 may include templates that have predefined attributes that may be appropriate for network slices that are intended to carry enhanced mobile broadband (eMBB) network traffic, massive machine-type communications (mMTC) traffic, ultra-reliable and low-latency communications (URLLC) network traffic, video stream network traffic, augmented reality/virtual reality network traffic, cloud gaming network traffic, etc. Network service attributes can include labels identifying characteristics of components of a network service, core functions or other functions used to provide the communication service, interfaces used by the communication service, SLAs, throughput rates, latency characteristics, uplink and downlink limits, maximum number of UE devices allowed for the service, priority of the service, maximum sessions supported by the service, etc. A service template can serve as a blueprint for on-demand provisioning of communication services. For example, a tenant of a mobile network operator may select a service template as described below to perform on-demand ordering and provisioning of a communication service having attributes defined by the selected template.

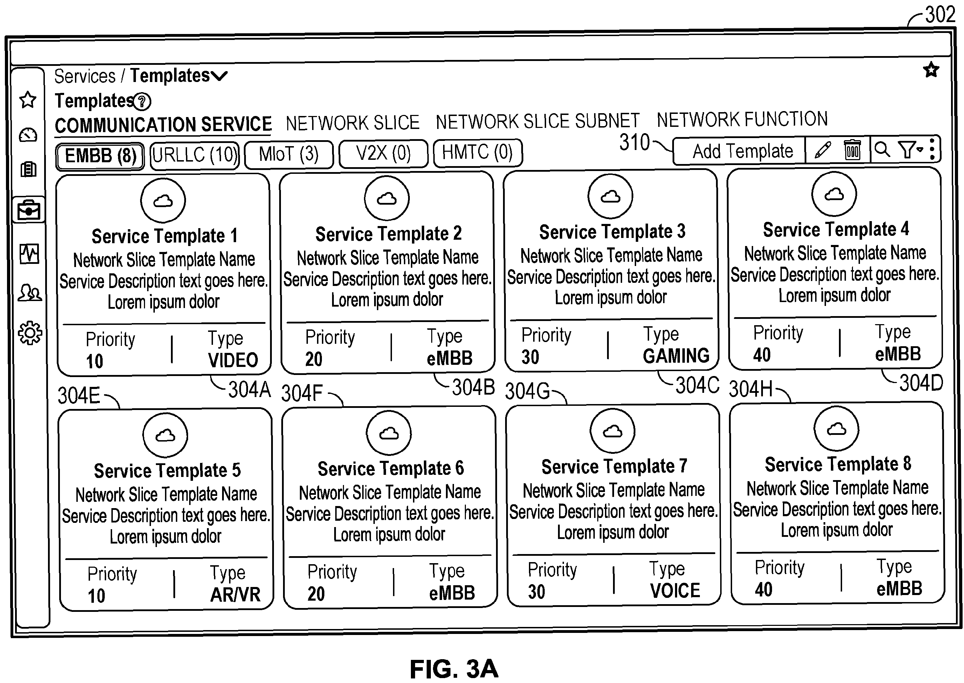

FIGS. 3A-3G are conceptual views of user interfaces for on-demand ordering and provisioning a communication service, according to techniques of the disclosure. The user interfaces of FIGS. 3A-3G will be discussed in conjunction with aspects of FIG. 1. Generally speaking, the user interfaces of FIGS. 3A-3G are part of a workflow that a tenant of a mobile network operator (or the mobile network operator itself) may perform to request on-demand provisioning of a communication service. The user interfaces illustrated in the examples of FIGS. 3A-3G may be provided to client device 101 by user interface 106 for presentation on a display of client device 101.

FIG. 3A is a conceptual view illustrating a service template selection screen 302, according to techniques of the disclosure. In some aspects, service template selection screen includes template icons 304A-304H (collectively "template icons 304") that each represent a different service template defined in service templates 110. In some aspects, a template icon can include the name of the template, a description of the template, a network slice template specified by the service template, a priority for network traffic for the provisioned service, and a type of service. A user desiring to provision a new communication service may utilize user interface 106 to select one of template icons 304 that most closely represents the type of communication service the user desires to provision.

Service template selection screen 302 include a control interface element 310 that include user interface elements that, when selected, cause the provisioning portal 104 to perform an action. For example, control interface element 310 includes an "add template" component that, when selected, causes provisioning portal 104 to present a user interface to configure a new service template. Other components of control interface element 310 can cause provisioning portal 104 to apply filters to service templates 304 and/or search for specific service templates 304.

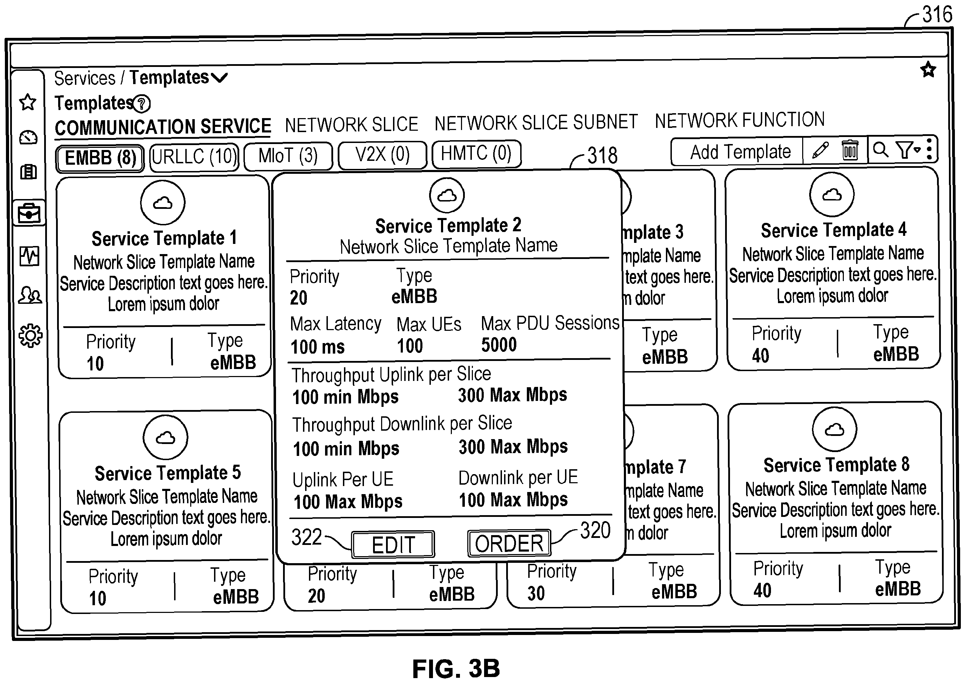

FIG. 3B is a conceptual view illustrating a service template definition screen 318, according to techniques of the disclosure. In the example illustrated in FIG. 3B, service template definition screen 318 is shown in response to selection of template icon 304B of FIG. 3A. Service template definition screen 318 displays attributes of the selected service template. Examples of such attributes include the priority of network traffic carried by a network slice created using the template (e.g., "20"), a type of network traffic carried by the network slice (e.g., "eMBB"). The attributes may also include service level attributes. For example, in the example illustrated in FIG. 3B, the template specifies a maximum latency (e.g., "100 ms), the maximum number of UEs for the communication service (e.g., "100"), and the maximum number of protocol data unit (PDU) sessions for the communication service (e.g., "5000"). Other SLA attributes that may specified include minimum and maximum uplink throughput for the network slice (e.g., "100 Mbps" and "300 Mbps" respectively), a minimum and maximum downlink throughput for the network slice (e.g., "100 Mbps" and "300 Mbps" respectively), and maximum uplink and downlink throughput per UE device (e.g., "100 Mbps" and "100 Mbps" respectively).

Service template definition screen may include an edit user interface element 322 and an order user interface element 320. In response to selection of edit user interface element 322, UI 106 of provisioning portal 104 can present an interface that can be utilized by a user to change various attributes from the default values provided by the selected service template. In response to selection of order user interface element 320, UI 106 of provisioning portal can present further user interfaces that to continue with a service order workflow. In some aspects, provisioning portal 104 may provide an estimated cost to the tenant for a service that is provisioned according to the selected template. For example, a communication service provisioned using a service template that specifies attribute values for a high throughput and/or low latency communication service may be priced higher than a communication service provisioned using a service template that does not specify attribute values for a high throughput and/or low latency communication service.

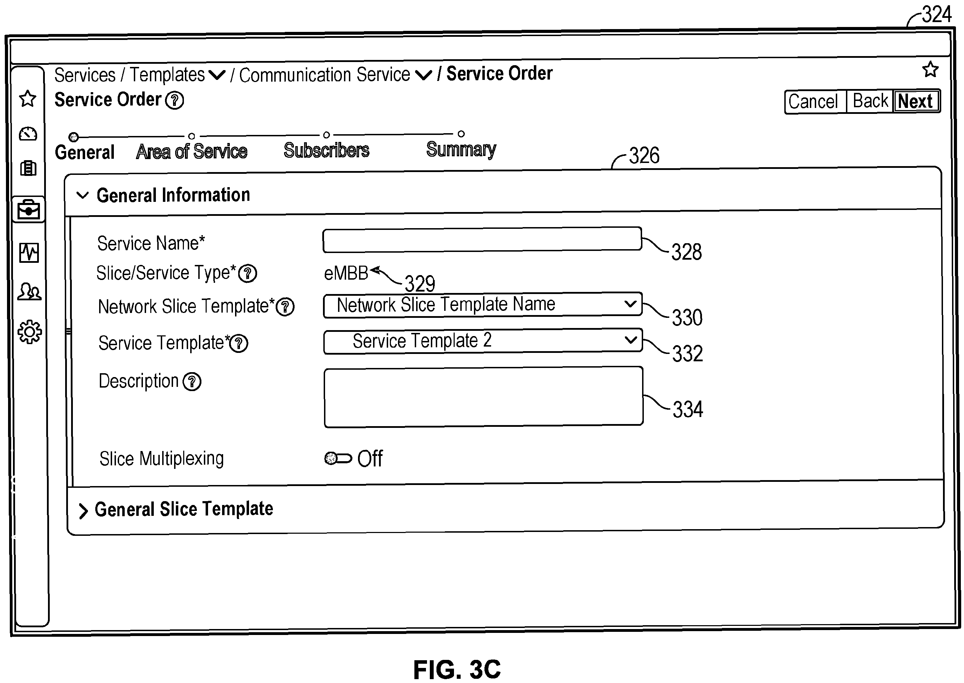

FIG. 3C is a conceptual view illustrating a general information portion 326 for a service order definition screen 324, according to techniques of the disclosure. UI 106 of provisioning portal 104 may present service order definition screen 324 to client device 101 in response to a user of client device 101 selecting the "order" user interface element 320 (FIG. 3B). General information portion 326 includes fields allowing a user to provide a communication service name 328 and a description 334 of the communication service to be provisioned. Additionally, general information portion 326 includes fields that can be used to modify attributes of the communication service from the defaults provided by the service template. For example, general information portion 326 may include service type field 329 that can be utilized to change the service type of the communication service to be provisioned from the default provided by the selected template. Similarly, network slice template field 330 can be used to change the network slice template from the default provided in the service template. Service template field 332 can be used to change the service template for the communication service to be provisioned to a different service template.

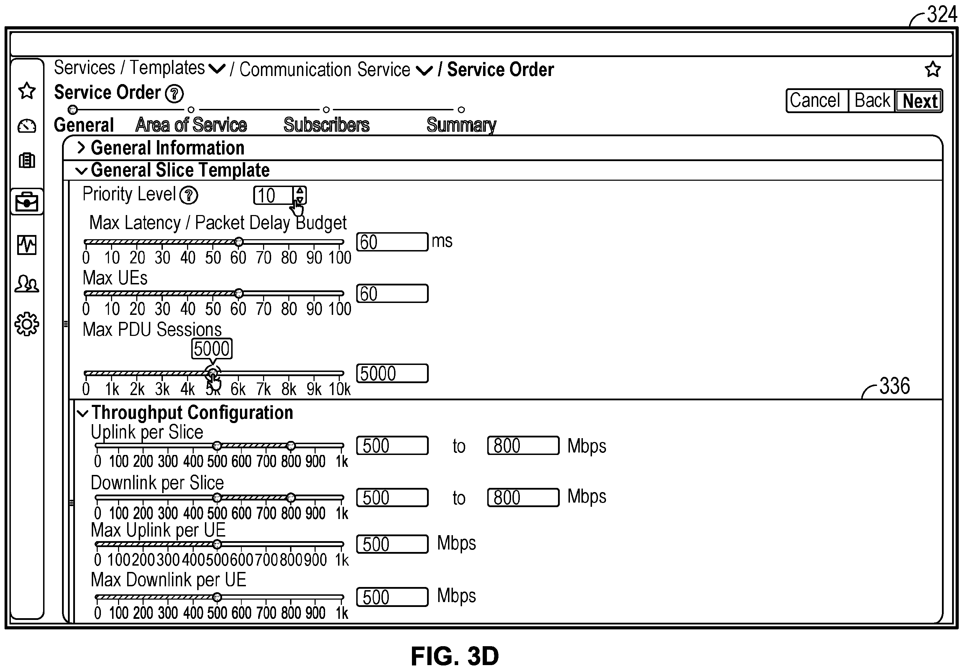

FIG. 3D is a conceptual view illustrating a general slice information portion 336 for a service order definition screen 324, according to techniques of the disclosure. General slice information portion 336 includes fields allowing a user to modify SLA related attributes for the network slice to be provisioned for the communication service. For example, general slice information portion 326 may include user interface elements allowing a user to modify SLA related attributes from the defaults provided by the network slice template associated with the service template. In the example illustrated in FIG. 3D, such attributes include priority, maximum latency, maximum UEs, maximum PDU sessions, minimum and maximum uplink throughput, minimum and maximum downlink throughput, maximum uplink throughput per UE, and maximum downlink throughput per UE.

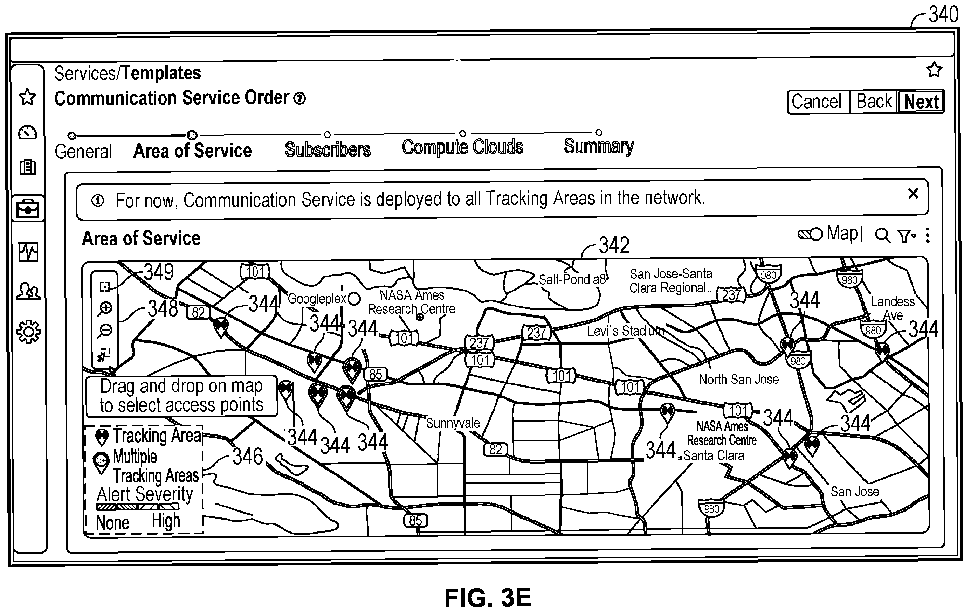

FIG. 3E is a conceptual view illustrating a tracking area selection screen 340 for a service order, according to techniques of the disclosure. Generally speaking, a tracking area is a set of one or more mobile network cells within region that are grouped together to facilitate reducing overhead involved with managing UEs. For example, handshaking protocols can be avoided when A UE moves from one cell in a tracking area to another cell in the same tracking area. A network slice can be associated with multiple tracking areas. Tracking area selection screen 340 of UI 106 provides selection mechanism for associated tracking areas with the network slice to be provisioned as part of a communication service. For example, a tenant may want to localize where a communication service is provided to their subscribers and can do so by selecting the desired tracking areas from selection screen 340. In the example illustrated in FIG. 3E, tracking area selection screen 340 shows a map 342 illustrating tracking areas 344 within a region. A user can utilize tracking area selection screen 340 to select one or more of tracking areas 344 to include in a network slice to be provisioned for the communication service.

Tracking area selection screen 340 includes a legend 346 that explains aspects of the tracking areas 344 shown on tracking area selection screen 340. As an example, legend 346 shows a color coded bar that can indicate an alert condition and severity associated with a tracking area. Tracking area selection screen 340 also includes control menu 348 having interface elements that can be used to select tracking areas 344 within a region, zoom in or zoom out on the map, etc. In some aspects, a user can utilize region selection tool 349 to select tracking areas of the mobile network operator that are within the region bounded by a rectangle formed using region selection tool 349. As an example, a tenant may desire to provide a specialized communication service in or near a stadium. The tenant can use region selection tool 349 to define the desired region around the stadium on map 342.

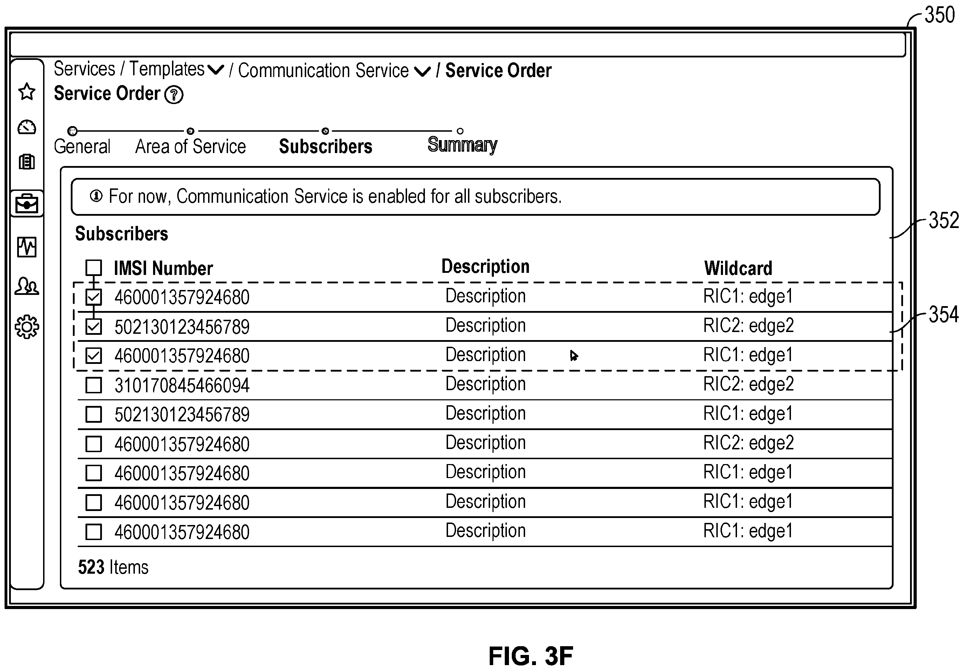

FIG. 3F is a conceptual view illustrating a subscriber screen 350 for a service order, according to techniques of the disclosure. Subscriber screen 350 of UI 106 can present a list 352 of subscribers associated with a tenant that is provisioning a communication service. The tenant can select the subscribers from the list that are to be given access to the communication service being provisioned by the tenant. In the example illustrated in FIG. 3F, a set of subscribers 354 has been selected to be granted access to the communication service once provisioned.

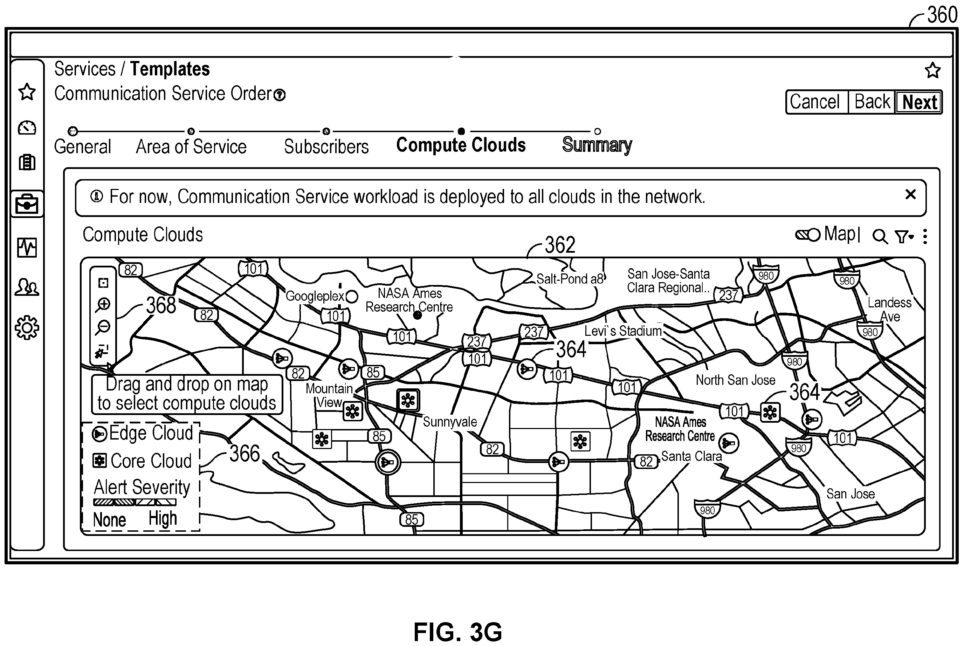

FIG. 3G is a conceptual view illustrating a compute cloud selection screen 360 for a service order, according to techniques of the disclosure. In the example illustrated in FIG. 3G, compute cloud selection screen 360 shows a map 362 illustrating icons 364 that represent compute clouds and/or data centers within a region. In some aspects, the compute clouds and/or data centers displayed on map 362 may be limited to compute clouds and/or data centers that are within the tracking areas previously selected via tracking area selection screen 340 of FIG. 3E. A user can utilize compute cloud selection screen 360 to select one or more of icons 364 representing the compute clouds and/or data centers that are to provide compute resources to execute workloads involved in providing the communication service to be provisioned. For example, workloads may include RAN functions, core 105 functions, etc. A user can select a compute cloud based on desired characteristics of the communication service. For example, the user may select an icon 364 representing an edge cloud if low latency to the end user is desired. Further, a user may select an icon representing a core cloud to cause centralized units (CUs) to positioned near a core cloud, and may select icons representing an edge cloud to cause distributed units (DUs) to be located at an edge cloud. In some aspects, a compute cloud may have a label that indicates characteristics of the compute cloud. For example, the compute cloud may have label indicating the compute cloud is an edge compute cloud, a core compute cloud. Further, labels may indicate the processing power of the compute cloud. Other label may indicate other characteristics of a compute cloud. A mobile network operator can assign such labels to compute clouds.

Compute cloud selection screen 360 can include a legend 366 that provides information about the elements on map 362. As an example, legend 346 shows a color coded bar that can indicate an alert condition and severity associated with compute clouds shown on map 362. Compute cloud selection screen 360 also includes control menu 368 that provides user interface elements that can be used to select icons 364 within a region, zoom in or zoom out on the map, etc.

Returning to FIG. 1, in some aspects, the screens shown in FIGS. 3A-3G can be used to complete a workflow that gathers information from a user regarding a communication service to be provisioned on-demand by the mobile network operator. The information can be used to create service order 112 that can be processed by provisioning system 102 to provision the desired communication service.

Placement unit 120 can provide the information in service order 112 as input to a placement algorithm (also referred to as a homing algorithm) executed by placement unit 120 that can determine placement communication service elements (e.g., CUs and DUs) within the tracking areas and compute clouds selected by the user as described above. In some aspects, placement unit 120 places communication service elements based on labels associated with network slice elements. As an example, the placement algorithm can match attributes of the communication service specified in the service order with labels associated with infrastructure elements in the network slice template and labels of compute clouds. For instance, placement unit 120 may attempt to place a DU for a communication service whose attributed indicates low latency is required in a DU that is at an edge cloud selected by the user. Placement unit 120 may use other characteristics and attributes to determine placement of the network resources used by the communication service. For example, placement unit 120 can use labels associated with each compute cloud that may define the scope of the service (e.g., edge, regional, national). Additionally, placement unit 120 may utilize labels that specify a container runtime (e.g., Kubernetes, Openstack, etc.) to constrain placement of workloads to resources that support the specified container runtime. Further, placement unit may utilize labels that indicate that a network resource includes a smart NIC when workloads in the communication service to be deployed have characteristics indicating that a smart NIC is required (or desirable). Moreover, placement unit 120 can take affinity constraints into account. For example, placement unit may attempt to place a CU in the same cloud (or cloud provider) as a DU.

In some aspects, compute cloud selection screen 360 of FIG. 3G may be an optional part of a workflow. In such aspects, the placement algorithm of placement unit 120 can automatically include compute clouds and data centers that are within the tracking areas selected via tracking area selection screen 340 of FIG. 3E. In some aspects, a user can optionally use compute cloud selection screen 360 to provide a finer grained selection of compute clouds and/or data centers.

In some aspects, placement unit 120 can generate an estimate of costs to the user associated with the communication service to be provisioned. The estimate can be provided the user, and the user can utilize the estimate to determine whether or not to have the communication service deployed by deployment unit 122.

In some aspects, placement unit 120 can determine if there is a feasible placement for the communication service elements that are needed to provision the communication service. If there is such a feasible placement, the placement details can be provided as input to deployment unit 122, which can perform the provisioning of the communication service based on service order 112 and the placement determined by placement unit 120. If there is not a feasible placement for the communication service using the parameter and information gathered by the workflow represented by FIGS. 3A-3G, provisioning portal 104 can inform the user that the communication service cannot be deployed as specified. The user can then return to the screens of FIGS. 3A-3G to modify the parameters so that the feasibility of the communication service with respect to placement of network resources can be redetermined by placement unit 120.

In the example workflow screens shown in FIG. 3E and FIG. 3G, a map view of tracking areas and compute clouds is provided to the user. Additionally, or as an alternative, a list view of tracking areas and compute clouds may be provided.

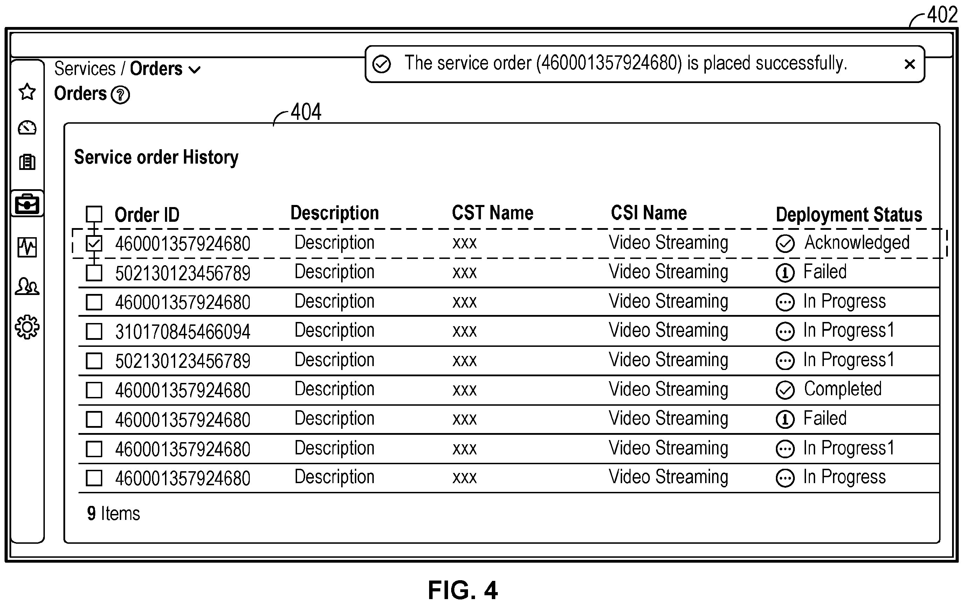

FIG. 4 is a conceptual view of a user interface showing a service order history, according to techniques of the disclosure. In the example illustrated in FIG. 4, service order history screen 402 includes a list 404 of service orders that have been received for processing by deployment unit 122 (FIG. 1). The history of service orders can indicate that the service order has been received but not yet processed, is currently being processed, has completed processing, or failed to be processed.

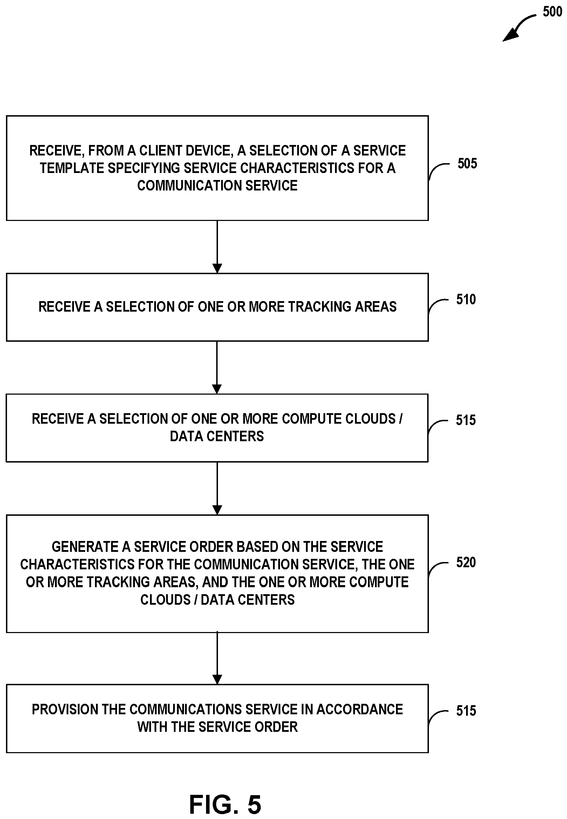

FIG. 5 is a flow diagram illustrating example operations of a provisioning portal, in accordance with one or more techniques of this disclosure. A provisioning portal may receive, from a client device, a selection of a service template specifying network service attributes for a communication service (505). Next, the provisioning portal may receive a selection of one or more tracking areas (510). Next, the provisioning portal may receive a selection of one or more compute clouds and/or data centers (515). Next, the provisioning portal may generate a service order based on the network service attributes for the communication service, the one or more tracking areas, and the one or more compute clouds (520). Next, a provisioning system may provision the communication service in accordance with the service order (525).

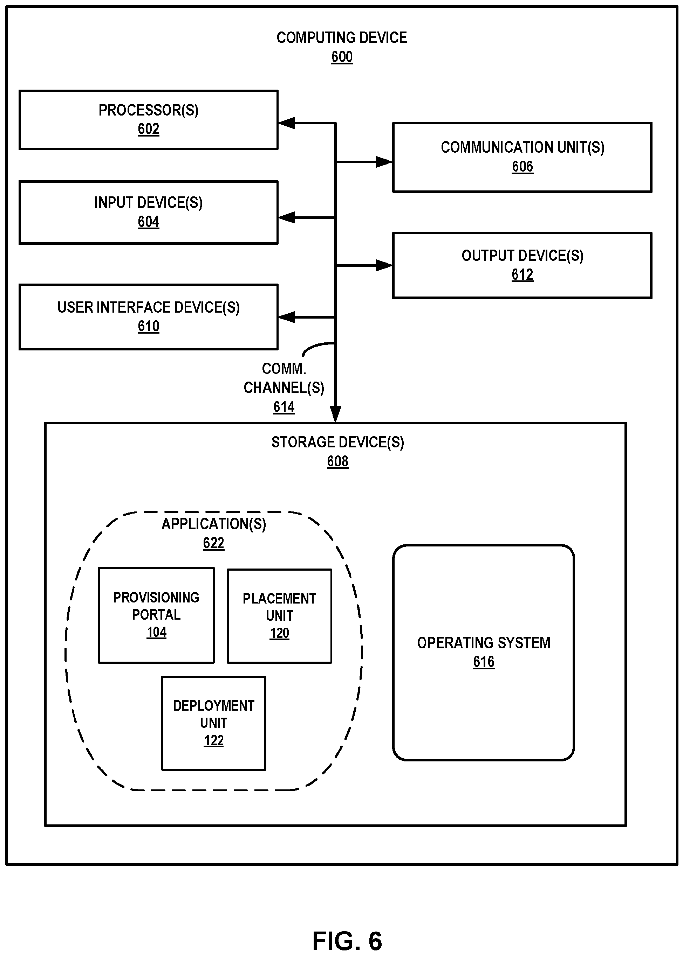

FIG. 6 is a block diagram illustrating further details of one example of a computing device that operates in accordance with one or more techniques of the present disclosure. FIG. 6 may illustrate a particular example of a server or other computing device 600 that includes one or more processor(s) 602 for executing any one or more of provisioning portal 104 , placement unit 120, deployment unit 122 or any other system, application, node software, or module described herein. Other examples of computing device 600 may be used in other instances. Although shown in FIG. 6 as a stand-alone computing device 600 for purposes of example, a computing device may be any component or system that includes one or more processors or other suitable computing environment for executing software instructions and, for example, need not necessarily include one or more elements shown in FIG. 6 (e.g., communication units 606; and in some examples components such as storage device(s) 608 may not be co-located or in the same chassis as other components).As shown in the specific example of FIG. 6, computing device 600 includes one or more processors 602, one or more input devices 604, one or more communication units 606, one or more output devices 612, one or more storage devices 608, and user interface (UI) device 610. Computing device 600, in one example, further includes one or more applications 622 and operating system 616 that are executable by computing device 600. Each of components 602, 604, 606, 608, 610, and 612 are coupled (physically, communicatively, and/or operatively) for inter-component communications. In some examples, communication channels 614 may include a system bus, a network connection, an inter-process communication data structure, a message bus, or any other method for communicating data. As one example, components 602, 604, 606, 608, 610, and 612 may be coupled by one or more communication channels 614.

Processors 602, in one example, are configured to implement functionality and/or process instructions for execution within computing device 600. For example, processors 602 may be processing circuitry capable of processing instructions stored in storage device 608. Examples of processors 602 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 608 may be configured to store information within computing device 600 during operation. Storage device 608, in some examples, is described as a computer-readable storage medium. In some examples, storage device 608 is a temporary memory, meaning that a primary purpose of storage device 608 is not long-term storage. Storage device 608, in some examples, is described as a volatile memory, meaning that storage device 608 does not maintain stored contents when the computer is turned off. Examples of volatile memories include random access memories (RAM), dynamic random access memories (DRAM), static random access memories (SRAM), and other forms of volatile memories known in the art. In some examples, storage device 608 is used to store program instructions for execution by processors 602. Storage device 608, in one example, is used by software or applications running on computing device 600 to temporarily store information during program execution.

Storage devices 608, in some examples, also include one or more computer-readable storage media. Storage devices 608 may be configured to store larger amounts of information than volatile memory. Storage devices 608 may further be configured for long-term storage of information. In some examples, storage devices 608 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 600, in some examples, also includes one or more communication units 606. Computing device 600, in one example, utilizes communication units 606 to communicate with external devices via one or more networks, such as one or more wired/wireless/mobile networks. Communication units 606 may include a network interface card, such as an Ethernet card, an optical transceiver, a radio frequency transceiver, or any other type of device that can send and receive information. In some examples, computing device 600 uses communication unit 606 to communicate with an external device.

Computing device 600, in one example, also includes one or more user interface devices 610. User interface devices 610, in some examples, are configured to receive input from a user through tactile, audio, or video feedback. Examples of user interface devices(s) 610 include a presence-sensitive display, a mouse, a keyboard, a voice responsive system, video camera, microphone, or any other type of device for detecting a command from a user. In some examples, a presence-sensitive display includes a touch-sensitive screen.

One or more output devices 612 may also be included in computing device 600. Output device 612, in some examples, is configured to provide output to a user using tactile, audio, or video stimuli. Output device 612, in one example, includes a presence-sensitive display, a sound card, a video graphics adapter card, or any other type of device for converting a signal into an appropriate form understandable to humans or machines. Additional examples of output device 612 include a speaker, a cathode ray tube (CRT) monitor, a liquid crystal display (LCD), or any other type of device that can generate intelligible output to a user.

Computing device 600 may include operating system 616. Operating system 616, in some examples, controls the operation of components of computing device 600. For example, operating system 616, in one example, facilitates the communication of one or more applications 622, access network intelligent controller 102 and/or access network agents 624 with processors 602, communication unit 606, storage device 608, input device 604, user interface devices 610, and output device 612.

Application 622 may also include program instructions and/or data that are executable by computing device 600. Example applications 622 executable by computing device 600 may include application and/or other software to implement capabilities described above. For example, applications 622 can include applications associated with provisioning portal 104, placement unit 120, and deployment unit 122.

In a telecommunications environment, a service provider desires to onboard and manage clouds from different cloud providers, such as bare metal servers, public clouds, private clouds, etc. These clouds may have multiple resource groups managed by various deployment agents, such as Kubernetes, Openstack, etc., to host several heterogeneous resources. The resources in the resource groups managed by these clouds may range from cell sites, to edge clouds, to regional clouds, etc., and these clouds may host RAN, network slice workloads, and network functions, including virtualized network functions (VNFs), physical network functions (PNFs), or cloud-native network functions (CNFs) (sometimes referred to as containerized network functions). In a telecommunications environment, a provider may desire to onboard and manage 10,000s to 100,000s or more clouds in a Service Management & Orchestration (SMO). The task of registering, onboarding, managing, and visualizing these large sets of clouds becomes a complex problem.

In accordance with the techniques of the disclosure, a user interface provides a feature-rich topology view to enable a user to visualize the complex topology of interconnected clouds and resources in a simple and streamlined view that supports multi-level hierarchy. Further, the user interface as described herein provides tools to enable the user to onboard and manage clouds in the SMO platform.

In some examples, the user interface provides a visualization of the complex topology of an edge-to-edge network slice that includes transport links to show cloud interconnectivity at a multi-level hierarchy. In some examples, the user interface further provides a topology view which supports expanding, collapsing, grouping, and filtering of clouds and resources to support scalability. In some examples, the user interface provides tools for infrastructure provisioning to enable a user to perform instantiation and registration of new clouds with the SMO. In some examples, the user interface provides tools for infrastructure lifecycle management that enables a user to perform software or hardware updates or to scale a cloud in or out. In some examples, the user interface provides tools for monitoring to enable a user to see resource details, such as slice workloads and inbound and outbound traffic for each cloud within a network slice. In this way, the user interface described herein may allow a user to perform scalable management as well as display statistics and cloud details in a fashion not possible with other implementations.

The user interface provides infrastructure administrators with a simple way of onboarding and managing clouds and resources. In some examples, the user interface may present a topology view with a toolbar with which a user may interact to enable the user to onboard and register a new cloud instance in a provisioning phase that may be used to host network slice workloads. Once added, a user may view and manage constituent resource groups and resources along with performing lifecycle management operations via the user interface. The user interface described herein also provides a monitoring capability to enable a user to view and manage deployed network slice workloads and/or network functions.

In some examples, the user interface may provide tools for provisioning. For example, a user may onboard a new cloud via the user interface. Once a cloud is registered and activated, the user interface may display a representation of the cloud in a topology view, whereupon the cloud is ready to host slice workloads.

In some examples, a user may use the user interface to onboard a cloud as follows. A user adds, via the user interface, one or more identity keys of the cloud in the SMO. The user registers, via the user interface, the cloud with the SMO. Further, an infrastructure management agent performs identity and software checks of the cloud. A deployment management agent manages resource groups and resources. Subsequently, the SMO activates the cloud to host slice workloads.

In some examples, the user interface described herein may provide tools for lifecycle management. For example, the user interface may provide an infrastructure topology view which streamlines lifecycle management workflow of clouds and resources. An infrastructure administrator may select, via the user interface, a single cloud instance and perform lifecycle management operations.

Alternatively or in addition, an infrastructure administrator may select, via the user interface, multiple clouds using filters and perform batch updates. In some examples, the user interface may provide filters, including operating versions or flavors, software versions or type (e.g., Docker, Kubernetes), etc., which the administrator may use to group resources and clouds and perform batch operations and updates of such groups.

In some examples, the user interface described herein may provide a maintenance window. For example, an administrator may provide an input to the user interface to enable display of a maintenance window for a single resource or a group of resources within the topology view. During this maintenance window, the user interface may deactivate a cloud or resource instance so that no new slice workloads are deployed. Additionally, the user interface may cause already deployed slice workloads to be moved to a different instance to provide a minimum or no downtime. An administrator may, via the maintenance window, scale a cloud in or out, apply security patches, or upgrade OS and software versions. Once the required updates and software patches are pushed, the user interface disables the maintenance window and enables selected clouds or resources for deployment.

In addition to the manual operations described above, the topology view of the user interface may also provide workflows that allow an administrator to automate fault and performance management of resources in a closed feedback loop.

In some examples, the user interface described herein may provide tools for monitoring and visualization. For example, the user interface may provide an infrastructure topology view which displays the complex interconnections of clouds and resources in a simple and streamlined manner. The infrastructure topology view depicts clouds and resources in a multi-level hierarchical view, as well as providing expanding and collapsing view features for scalability. The infrastructure topology view also provides severity information about network slice workloads and traffic details.

In some examples, the Infrastructure Topology view of the user interface may provide tools to enable a user to build an end-to-end user workflow. For example, the Infrastructure Topology view may enable a user to define and visualize the cloud topology along with constituent resource groups and resources. Further, the Infrastructure Topology view may enable a user to visualize basic statistics (e.g., in Cloud Topology view described herein). In some examples, the Infrastructure Topology view may depict an action bar with which a user may onboard or remove clouds from inventory, etc. In some examples, the Infrastructure Topology view may further include icons to switch between a "list" view and a "geographical map" view.

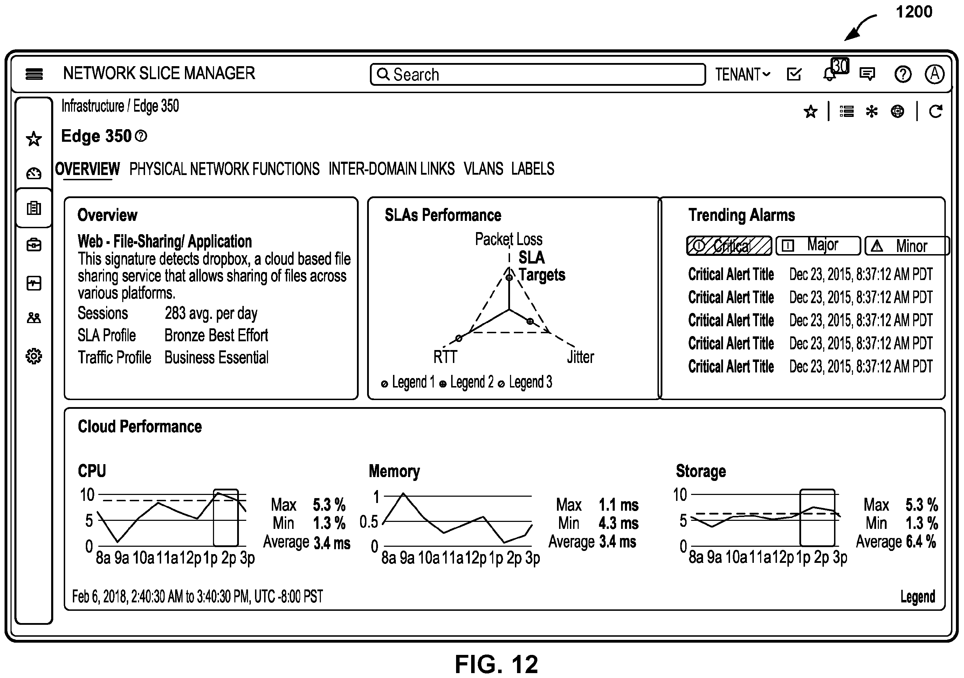

In some examples, the Infrastructure Topology view provides a visualization of clouds and resources according to a hierarchical view. In some examples, the hierarchy includes 4 levels: a cloud and data center view, a resource group view, a resource and cluster view, and a node view. The user interface may allow a user to switch from one level to another by selecting the desired view as shown below in FIG. 12. In response to a selection of a level from a user, the user interface updates the topology view to depict a representation of clouds, resources, or resource groups, per the user's selection. The user interface may also depict the details of the clouds and constituent resource groups/resources in tooltips or overlays that are opened when the user selects an element (or hovers a cursor over the element).

In some examples, the Infrastructure Topology view depicts a first level of the hierarchical view as a Cloud (or data center) View. Additional illustration of the Cloud View is depicted in FIG. 12. The Cloud View may depict multiple clouds that belong to the same cloud provider and which may exist in the inventory. The Cloud View may represent clouds by the icon of cloud providers, such as public clouds, private clouds, bare metal, etc. The Cloud View may represent the interconnections between clouds by transport links, which represent several underlay and overlay technologies. Additionally, the Cloud View may display, to the user, one or more tooltips or overlays that represent constituent resource groups. In some examples, the Cloud View may enable a user to expand, via the user interface, the representation of the resource groups, wherein the Cloud View displays details of the resources of the selected resource group.

In some examples, the Infrastructure Topology view depicts a second level of the hierarchical view as a Resource Groups View. A cloud or datacenter may host one or more resource groups that include one or more resources or clusters. Resource groups can be managed by deployment management agents, For example, such as Kubernetes resources that may be managed by Vanilla k8s, TMC, Open Shift, etc. As another example, VM (Virtual Machines) resources may be managed by Openstack, VMware Integrated Openstack (VIO), Mirantis, etc. When displaying resource groups, the Resource Groups View displays, to the user, details about their deployment agents, including respective features and error handling.

In some examples, the Infrastructure Topology view depicts a third level of the hierarchical view as a Resources (or Clusters) view. A resource group can host and manage one or more resources or clusters. Resources may be categorized into different domains, such as a cell site domain, an edge domain, a regional domain, or national domain, etc. The Resources view displays a representation of these resources in a circular topology for simplicity. For example, each circle displayed by the Resources View represents a resource domain. In some examples, the Resources View may dynamically update a shape of the topology. For example, the Resources View may increase a radius of a circle representing a resource domain as a number of resources of the domain changes.

In some examples, the Resources View may dynamically update the topology layout with a user-defined configuration. In this fashion, the Resources View may support the changing of domain names and types, as well as user requirements for platforms with varying numbers of domains (e.g., 3, 4, 5, or more domains). In some examples, the Resources View may enable a user to specify an arbitrary number of levels and names.

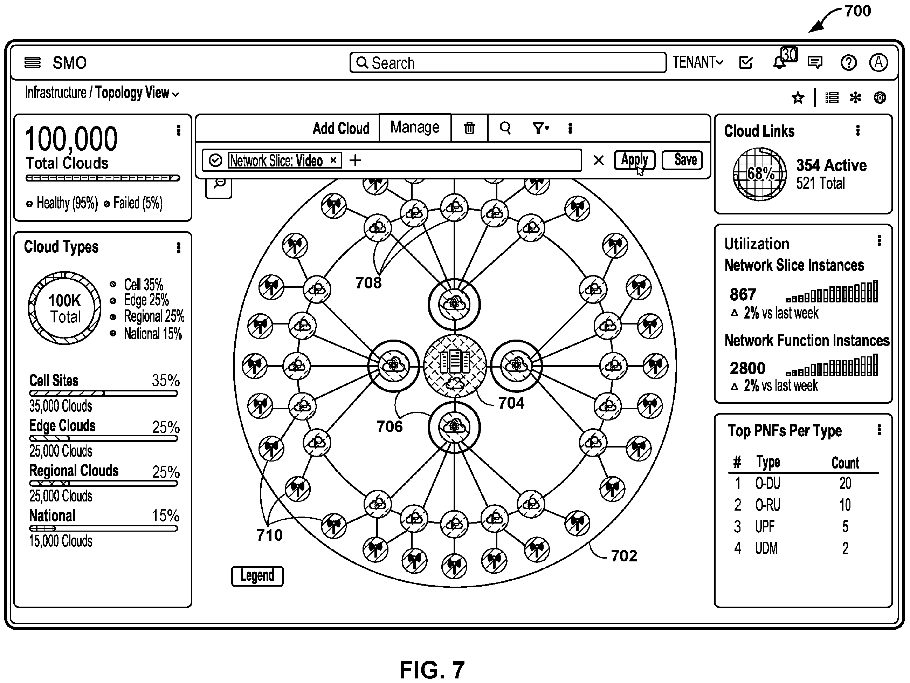

FIG. 7 is a conceptual view of user interface 700 for managing clouds and resources of a network slice, according to techniques of the disclosure. In some examples, UI 106 of FIG. 1 generates user interface 700 of FIG. 7 for display to a user.

As discussed above, a network slice may formed from a hierarchical group of elements and sub-elements. As described herein, these elements and sub-elements include clouds, cloud providers, data centers, resource groups, resources, clusters, manager nodes, and worker nodes. For example, a network slice may be formed by a combination of elements such as cloud providers and data centers. In turn, each cloud provider or data center may include multiple sub-elements, such as resource groups. Each resource group may include additional sub-elements, such as one or more resources or clusters. Furthermore, each resource or cluster may further include sub-elements such as one or more manager nodes or worker nodes.

The techniques of the disclosure enable a user interface to provide a hierarchical visualization of the network slice as a whole. For example, as depicted in FIG. 7, user interface 700 depicts an icon 702 representing a network slice, which includes icons 704, 706, 708, and 710 arranged in a hierarchical fashion, each of which represents various elements and sub-elements that form the network slice. For example, the network slice represented by icon 702 includes a cloud provider, which is represented by icon 704. The cloud provider represented by icon 704 includes a number of resource groups, which are represented by icons 706. Each resource group represented by icons 706 includes one or more resources, which are represented by icons 708. Each resource represented by an icon 708 includes one or more nodes, such as one or more worker nodes or management nodes, which are represented by icons 710.

In some examples, FIG. 7 depicts an example of the Resources (or Clusters) view of user interface 106 described above. In some examples, the Infrastructure Topology view depicts a fourth level of the hierarchical view as a Node View. The Node View depicts icon representations 710 of compute nodes that include various manager and worker nodes interconnected in a swarm or a related topology. In some examples, the user interface displays the Node View when a user selects a detailed view of a cluster depicted in the Cluster View described above.

In some examples, user interface 700 may use topology icons for different layouts to represent several types of clouds, network slice filtering and searching. In some examples, the topology view icons dynamically represent a number of multiple clouds and allow a user to collapse, expand, group, or filter icons 702, 704, 706, 708, and 710 to view individual elements of the network slice, such as individual clouds or cell towers. In some examples, the topology view dynamically shows slice information, cloud detail, and management information, such as information about a network slice instance (NSI), network slice subnet template (NSST), network slice subnet instance (NSSI), or other functional information associated with the cloud, resource group, or resource selected by the user. In some examples, the topology view includes customizable cards to visualize basic statistics (e.g., in Cloud Topology view). In some examples, the topology view uses scalable vector graphics (SVG) technology and graph layout libraries to allow configurable and dynamic layouts. The Infrastructure Topology view of the user interface can be used in any interactive and non-interactive diagrams that relate to network slicing, clouds, or cell towers.

In some examples, a user may desire to deploy 1000s or 10000s of clouds and resources in an inventory. User interface 700 may enable a user to visualize these large numbers of clouds and resources in a simple manner on a single pane of glass in a scalable manner. For example, the user interface described herein may provide expanding, collapsing, filtering, and grouping capabilities when displaying representation 702 of a network slice that includes icons 702, 704, 706, 708, and 710 representing large numbers of clouds (and/or other elements of the network slice) to a user. The user inface described herein may enable a user to manage vast numbers of clouds or resources on the same screen with a seamless way to interact with the infrastructure of the clouds or resources without requiring the user to toggle between multiple views, each of which depicts, e.g., a single element of a network slice such as a cloud view, node view, etc.

As depicted in the example of FIG. 7, a large number of clouds are represented by collapsing the clouds into icons 704, each icon 704 of which represents one or more clouds. In some examples, the user interface may represent resources by grouping the resources per domain, such as per-cell domain, edge domain, regional domain, or national domain, into a resource group, and displaying icon 706 as representative of one or more resource groups. To group resources into resource groups, the user interface may apply user-defined or default grouping logic.

In some examples, the user may use user-defined logic to specify the groupings. For example, a user may specify the parameters for grouping and apply the parameters to the layout of the user interface. The parameters may specify to group resources by location (e.g., city, state, region), by labels applied to the resources, by providers, etc. Once the user selects an option, such as to group the resources by state, the user interface depicts an icon 706 representing a resource group that includes the resources in the selected group (e.g., by states in this example), and may further depict one or more icons 708 representing each resource within the selected resource group. A collapsed icon 704, 706, 708 represents the respective clouds, resource groups, or resources which are present in a particular category (e.g., a particular state in the foregoing example.

In some examples, the user may use default logic to specify the groupings. For example, if a user does not provide any grouping logic, then the user interface may attempt to optimize the view and group the nodes based on common connections. For example, the user interface may apply one or more graph clustering algorithms to group to graph nodes. As another example, the user interface may group 10 edge clouds connected to the same set of clouds together based on the common connections between the clouds. In some examples, the user interface displays multiple cloud details in a tooltip or overlay window without expanding an icon representing a cluster of clouds into multiple icons, each representing an individual cloud of the constituent clouds of the cluster.

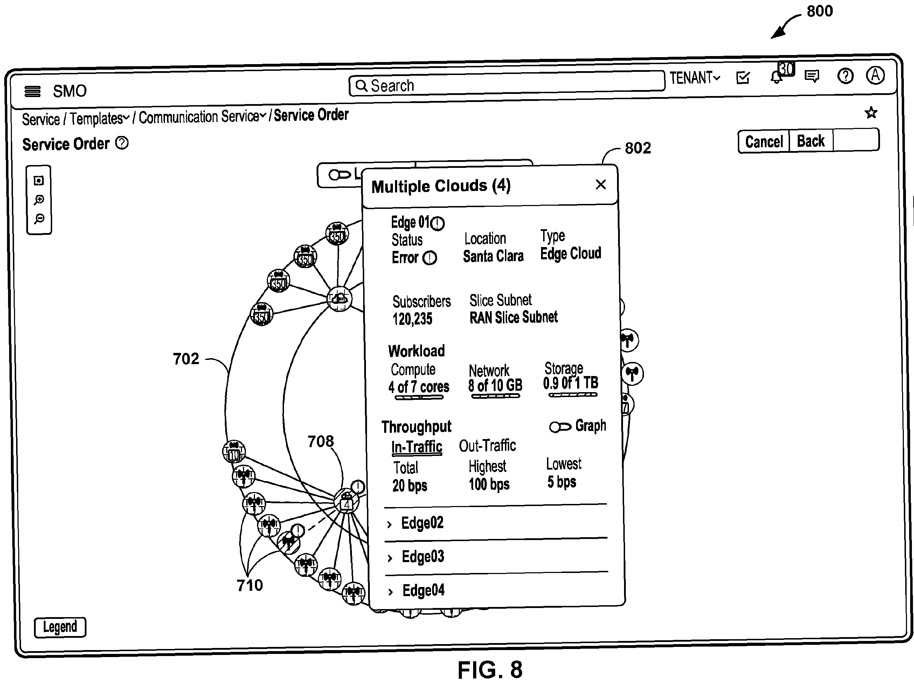

FIG. 8 is a conceptual view of a user interface for managing clouds and resources of a network slice, according to techniques of the disclosure. User interface 800 of FIG. 8 may be an example of UI 106 of FIG. 1 and may be displayed to a user.

The user interface of FIG. 8 depicts an "edge cloud" window that depicts information about an edge cloud of a network slice selected by a user. The information about the edge cloud may include, for example, one or more errors, a location, a cloud type, a number of subscribers, a slice subnet type, a compute workload, a network workload, a storage workload, and network traffic statistics.

As depicted in the example of FIG. 8, user interface 800 depicts an icon 702 representing a network slice, which includes icons 708 and 710 arranged in a hierarchical fashion, each of which represents various elements and sub-elements that form the network slice. For example, the network slice represented by icon 702 includes a cloud provider, which is represented by an icon obscured by tooltip window 802 and not depicted in FIG. 8. The cloud provider includes a number of resource groups, which are represented by icons obscured by tooltip window 802 and not depicted in FIG. 8. Each resource group includes one or more resources, which are represented by icons 708. Each resource represented by an icon 708 includes one or more nodes, such as one or more worker nodes or management nodes, which are represented by icons 710.

As shown in the example of FIG. 8, a user may hover a cursor over an icon representing a group of clouds. In response the user interface presents tooltip window 802 depicting a list of the clouds within the group of clouds represented by the icon. In addition, the tooltip window provides a search functionality. Furthermore, in response to the user selecting the "accordion" button, the user interface may expand the tooltip window 802 to display details of individual clouds within the group.

In accordance with the techniques of the disclosure, a system as described herein provides a user interface for displaying a Cloud Management view of a network. In some examples, the user interface described herein may enable a user to visualize and design end-to-end user workflows, including onboarding new clouds, defining cloud topology, visualizing basic statistics, offboarding or removing clouds from the inventory, etc. The user interface described herein may display an overview, physical network functions, inter-domain links, VLANs, and labels for the network. Additionally, the user interface described herein may described herein may also display severity information, SLA, and cloud details about traffic.

In some examples, the user interface displays cloud management screens and workflows, Physical Network Function (PNF), Interface Definition Language (IDL), Virtual Local Area Network (VLAN), Labels, under one third level navigation view.

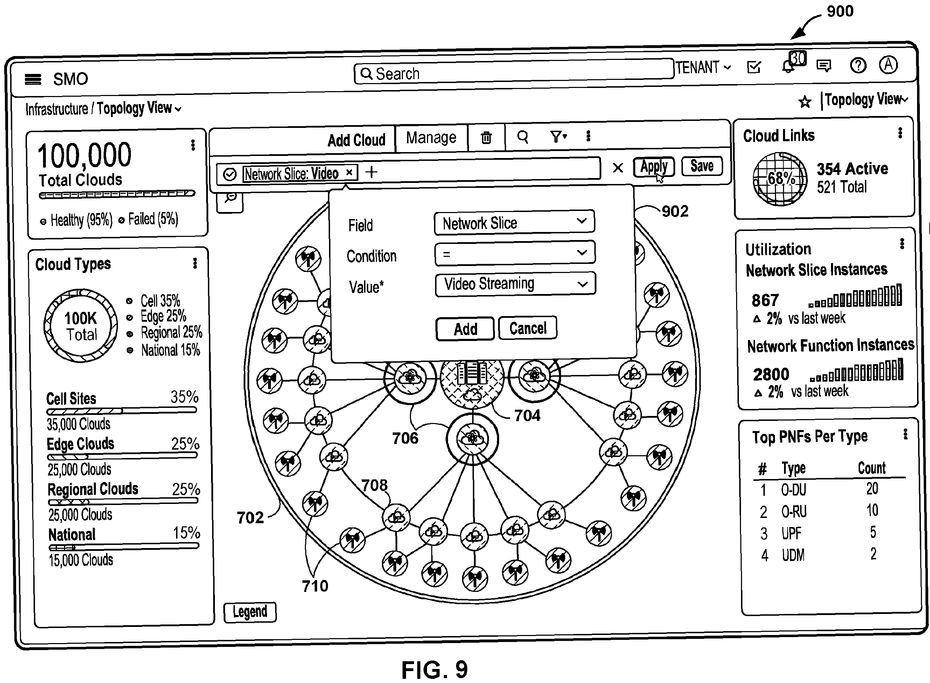

FIG. 9 is a conceptual view of a user interface 900 for managing clouds and resources of a network slice, according to techniques of the disclosure. In some examples, UI 106 of FIG. 1 generates user interface 900 of FIG. 9 for display to a user.

For example, as depicted in FIG. 9, user interface 900 depicts an icon 702 representing a network slice, which includes icons 704, 706, 708, and 710 arranged in a hierarchical fashion, each of which represents various elements and sub-elements that form the network slice. For example, the network slice represented by icon 702 includes a cloud provider, which is represented by icon 704. The cloud provider represented by icon 704 includes a number of resource groups, which are represented by icons 706. Each resource group represented by icons 706 includes one or more resources, which are represented by icons 708. Each resource represented by an icon 708 includes one or more nodes, such as one or more worker nodes or management nodes, which are represented by icons 710.

In some examples, user interface 900 of FIG. 9 provides tooltip window 902 which provides functionality to filter a complete topology and display icons 704, 706, 708, 710 representing only a subset of elements and sub-elements, e.g., such as clouds or resources, which satisfy certain criterion specified by the filter. This feature allows a user to focus on a specific subset of the infrastructure and perform lifecycle management operations, such as software updates, activation, decommission, etc. For example, as depicted in FIG. 9, if a user desires to view the clouds which host workloads of a particular slice, the user may interact with the filter field, condition, and value elements provided by tooltip window 902 of user interface 900. On applying the filter, user interface 900 updates the topology view with icons representing, e.g., the clouds that host workloads (e.g., network functions) for the selected network slice 702 in accordance with the selected filter options. To return to the original topology view, a user may interact with tooltip window 902 of user interface 900 to remove the filter criteria. In response, user interface 900 updates the layout to depict icons representing each of the clouds present in the inventory.

In some examples, user interface 900 enables a user to filter resources and clouds according to a number of criteria. For example, a user may filter clouds and resources that belong to a particular provider, are tagged with a specific label, host a workload of a network slice instance, or belong to a common provider, etc.

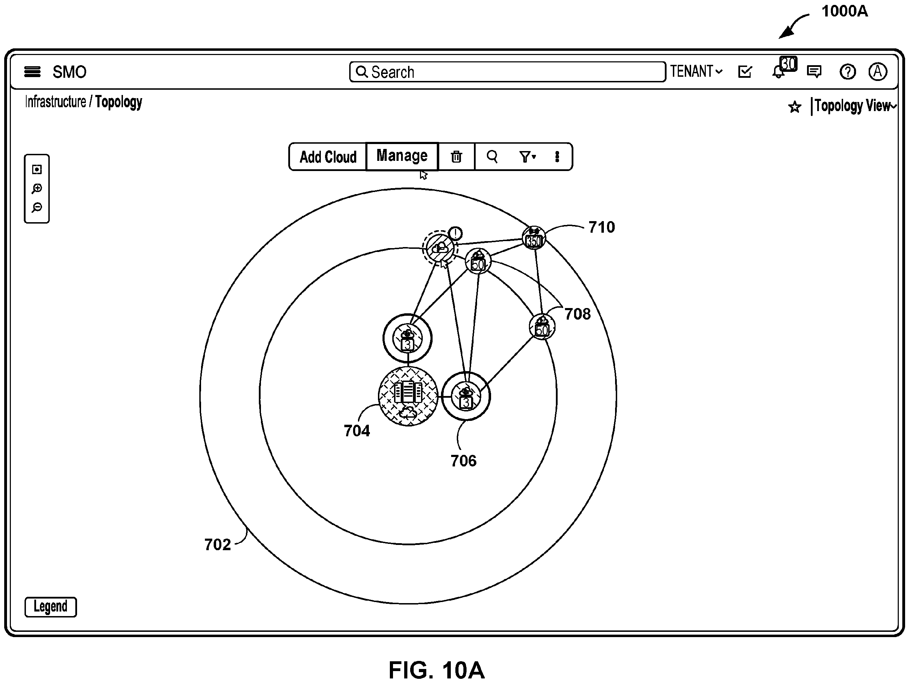

FIGS. 10A-10H are conceptual views of user interfaces 1000A-1000H (collectively, "user interfaces 1000") for managing clouds and resources of a network slice, according to techniques of the disclosure. In some examples, UI 106 of FIG. 1 generates user interfaces 1000 of FIGS. 10A-10H for display to a user.

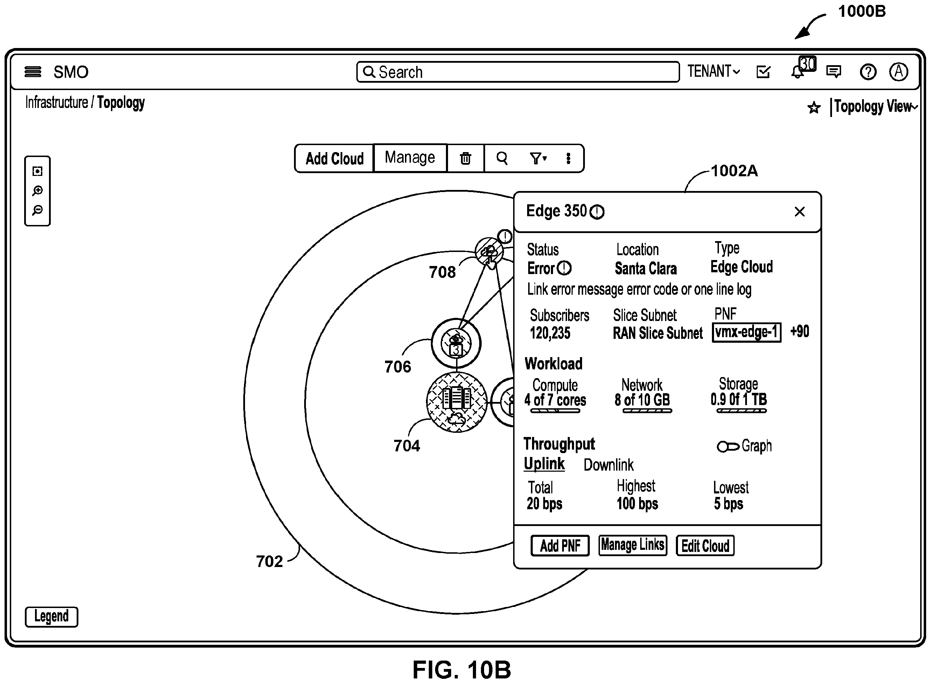

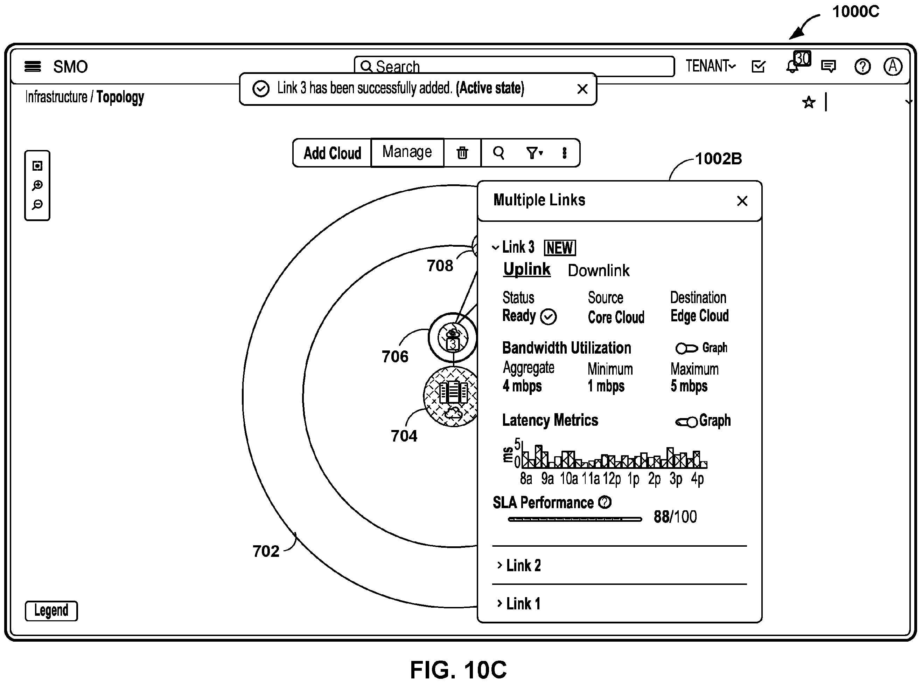

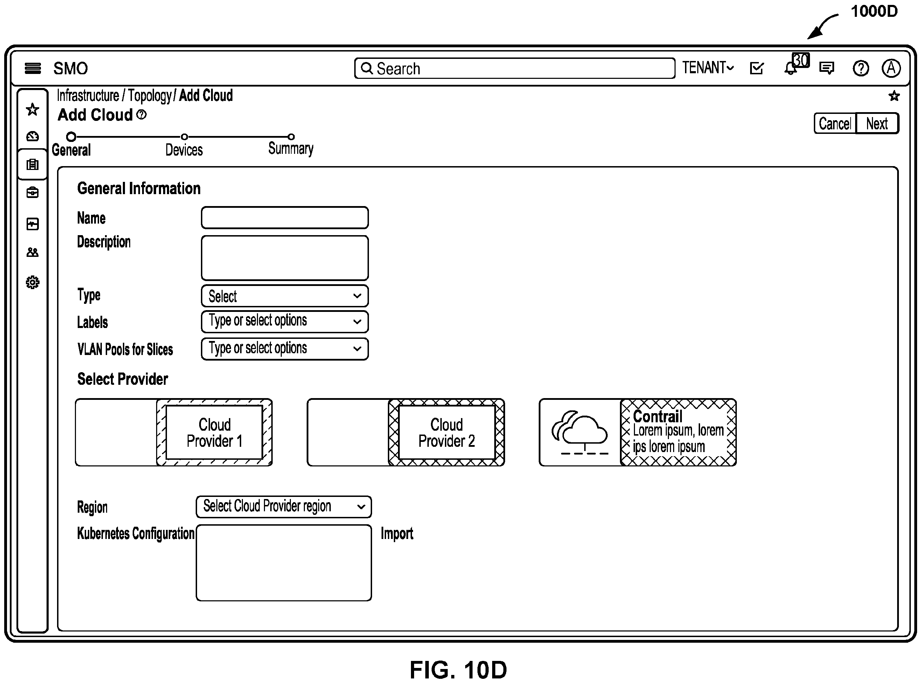

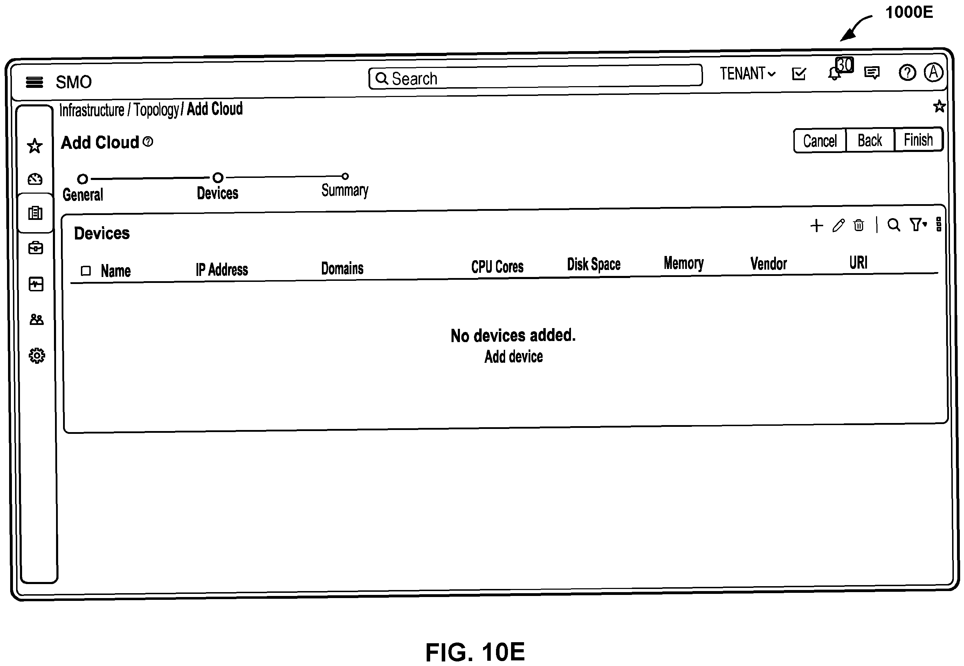

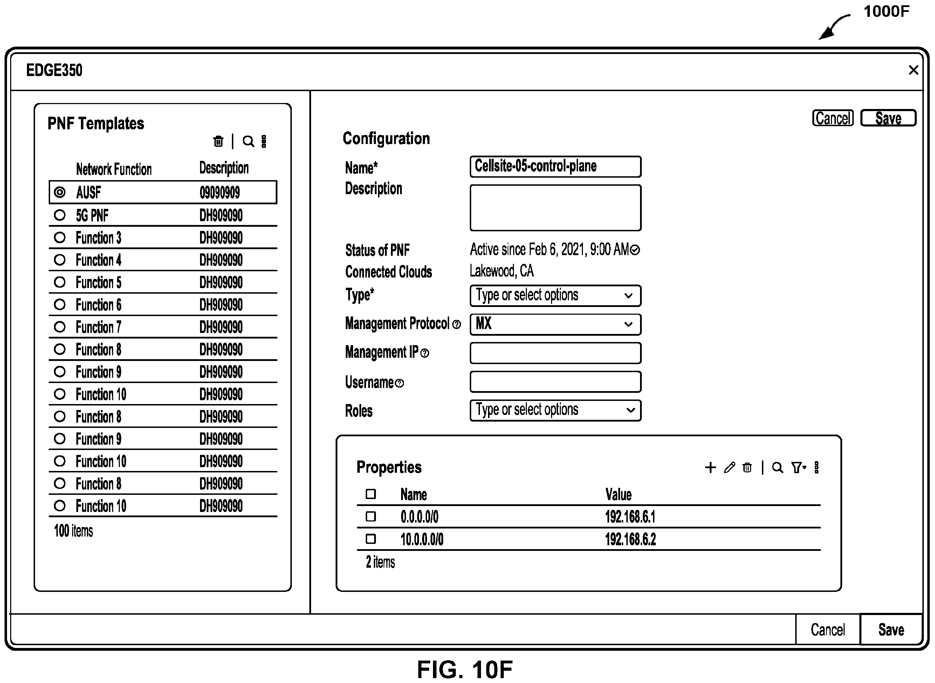

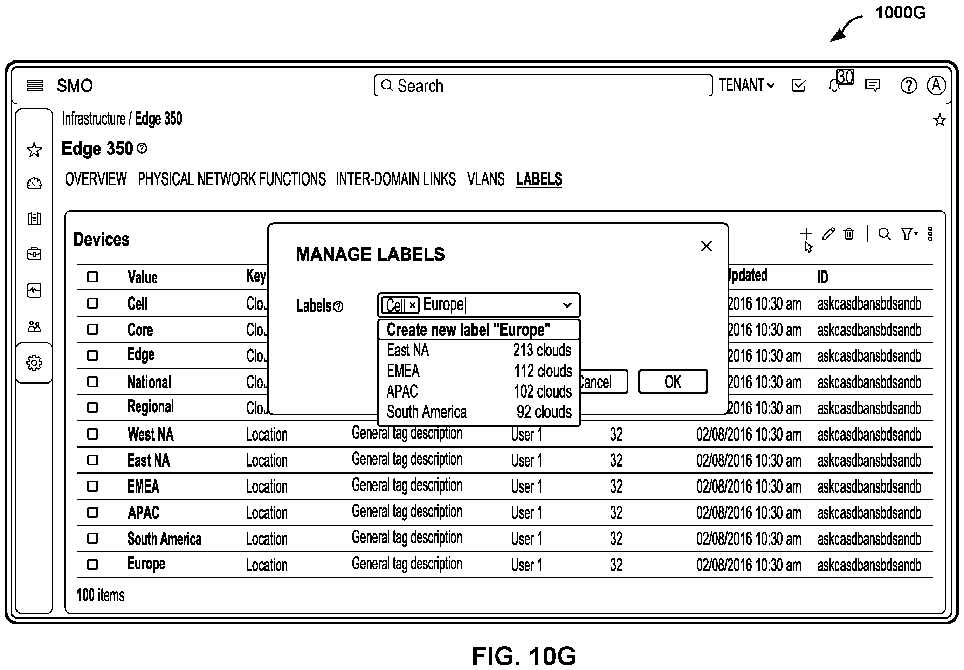

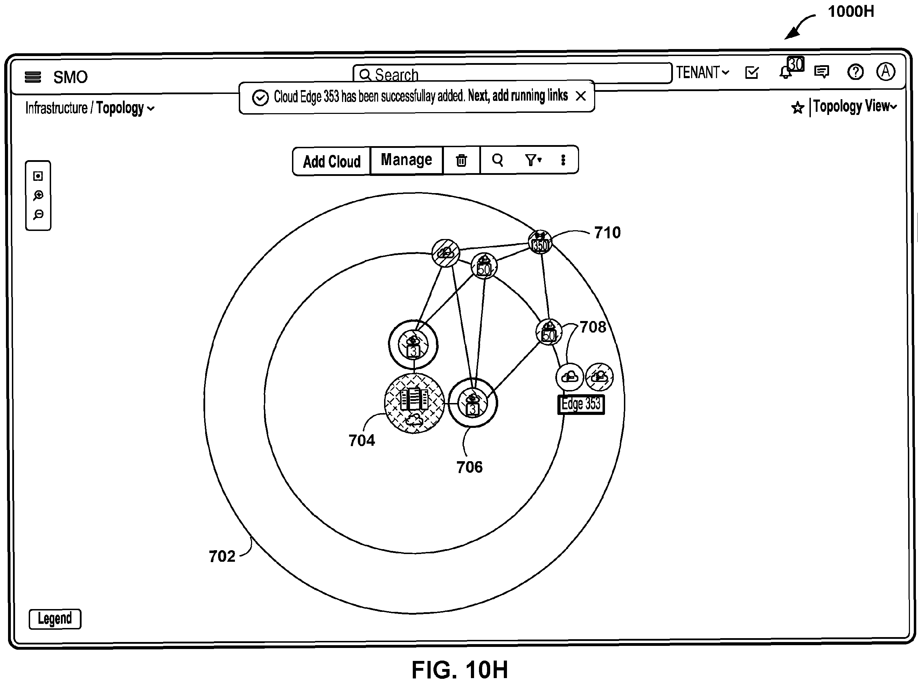

For example, as depicted in FIG. 10, user interfaces 1000 depict an icon 702 representing a network slice, which includes icons 704, 706, 708, and 710 arranged in a hierarchical fashion, each of which represents various elements and sub-elements that form the network slice. For example, the network slice represented by icon 702 includes one or more cloud providers, which are represented by one or more corresponding icons 704. Each cloud provider represented by a respective icon 704 includes one or more resource groups, which are represented by one or more corresponding icons 706. Each resource group represented by a respective icon 706 includes one or more resources, which are represented by one or more corresponding icons 708. Each resource represented by an icon 708 includes one or more nodes, such as one or more worker nodes or management nodes, which are represented by one or more corresponding icons 710.

User interfaces 1000 of FIGS. 10A-10H provide cloud management screens which may provide information and management tools to a user for different types of cloud data, network slice details, and SLA performance. The cloud management screens can be used in any use-cases that relate to network slicing, clouds, or cell towers. The cloud management screens put all workflows (PNF, IDL, VLAN, Labels) under one view. The cloud management workflow uses UI technologies and graph layout libraries to visualize, unify, and simplify dynamic technical information.

The user interface of FIGS. 10A-10H may provide a distinct view for multiple hierarchical levels of a network slice, including a network slice view, a cloud view, a cloud provider view, a data center view, a resource group view, a resource view, a cluster view, and/or a node view. Each view may display respective elements and sub-elements that form the network slice, such as the respective clouds, cloud providers, data centers, resource groups, resources, clusters, manager nodes, and worker nodes that form the network slice.

The user interface of FIGS. 10A-10H may allow a user to switch from displaying one level to another by providing an interface with which the user may select a desired view. In response to a selection of a particular view from a user, the user interface updates the topology view and depicts a representation of the clouds, resources, or resource groups in accordance with the user's selection.

Additionally, FIGS. 10A-10H depict examples wherein user interfaces 1000 display status information and warnings to a user about one or more elements or sub-elements within the network slice, such as one or more clouds, resource groups, or resources. In some examples, user interfaces 1000 may display details of the clouds and constituent resource groups or resources in tooltip windows or overlays 1002A and 1002B that are opened in response to the user selecting a cloud icon (or hovering a cursor over the cloud icon). In some examples, user interfaces 1000 display tooltip windows or overlays 1002A and 1002B that provide statistics and metric information for a cloud group selected by a user.

In some examples, a user may use user interfaces 1000D and 1000E to add one or more clouds, resource groups, resources, resource links, nodes, or devices to a network slice. In some examples, a user may configure and add a PNF instance to a cloud based on a PNF template via user interface 1000F of the present disclosure. In some examples, a user may use user interface 1000G to add one or more labels to one or more clouds, resource groups, or resource links. In some examples, a user may use user interfaces 1000 to manage one or more clouds, resource groups, resources, resource links, nodes, or devices of a network slice.

In accordance with the techniques of the disclosure, a system as described herein provides user interfaces 1000 for deployment and management of end-to-end network slicing with multi-cloud and multi-domain support, including RAN, Transport Network, Core, and SGi. A user interface as described herein may enable a network administrator to provision a complete communication service and related network slices to an infrastructure. Further, such a user interface as described herein may allow for the visualization of the full deployment process and provisioning statistics and details of all network slice subnets and network functions in a scalable manner.

An end-to-end network slice may span all the way from cell sites, to edge clouds, to regional clouds, and to national clouds. For example, a private 5G mobile network slice may deploy a RAN Domain workload on cell and edge clouds. Further, the same private 5G mobile network slice may deploy a Core Domain workload (e.g., such as including 5G core network functions) or other value-added services like IMS on other compute clouds (e.g., edge, regional, national). Further, a user may onboard a Transport domain of the private 5G mobile network slice by creating overlay networks on Interdomain links between the clouds to which the workloads are deployed.

In some examples, user interfaces 1000 provide a Communication Service Deployment view, which is a slice topology view showing a real-time deployment status of an end-to-end network slice. The Communication Service Deployment view may present, to a user, a visualization of all the elements and sub-elements, such as clouds and interdomain links, etc., currently used by a network slice. Furthermore, the Communication Service Deployment view may provide, to the user, interactive step-by-step deployment visualizations for deploying a network slice (or elements thereof). The Communication Service Deployment view may provide an interface that enables a user to perform both Day-1 (deployment of a network slice) and Day-2 (management and visualization of the network slice) operations.

In some examples, the Communication Service Deployment view provides a Link tooltip window, such as tooltip window 1002B of FIG. 10C. The Link tooltip window 1002B may display information and metrics for both uplink and downlink throughput, bandwidth, and latency of a link selected by a user.

In some examples, the Communication Service Deployment view provides a Cloud tooltip window, such as tooltip window 1002A of FIG. 10B. In some examples, the Cloud tooltip window 1002A may display workload information, such as slice subnets or network functions deployed on a cloud selected by a user. In some examples, the Cloud tooltip window 1002A may display storage and compute statistics, such as available and total CPU, Memory, and Disk information for a cloud selected by a user. In some examples, the Cloud tooltip window 1002A may display throughput metrics for inbound and outbound traffic for a slice selected by a user.

In some examples, the Communication Service Deployment view provided by user interfaces 1000 of FIGS. 10A-10H displays statistics cards with relevant deployment data. For example, a statistics card may display a total number of clouds hosting the workload of a slice selected by a user. As another example, a statistics card may display cloud types or a distribution of clouds (e.g., cell, edge, etc.). As another example, a statistics card may display PDU and UE sessions supported by the slice. As another example, a statistics card may display slice throughput for uplink and downlink directions. As another example, a statistics card may display a status of network slice subnets and network functions currently deployed to support an end-to-end slice.

The Communication Service Deployment view provided by user interfaces 1000 of FIGS. 10A-10H and described herein can be used for different layouts to represent various types of deployment services. The Communication Service Deployment view can be used in any interactive and non-interactive layouts that relate to network management applications. In some examples, the Communication Service Deployment view provides an interface that enables a user to visualize and perform a step-by-step deployment process of a network slice. In some examples, the Communication Service Deployment view uses SVG technology and graph layout libraries to allow a user to create configurable and dynamic layouts for displaying information about the network slice.

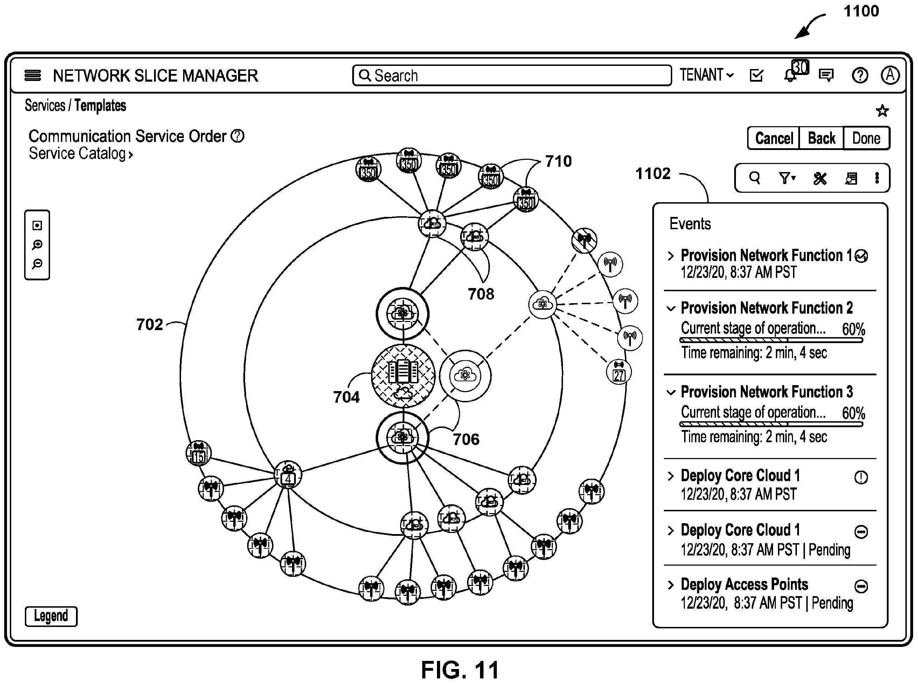

FIG. 11 is a conceptual view of user interface 1100 for managing elements of a network slice, such as clouds and resources, according to techniques of the disclosure. Specifically, FIG. 11 depicts an example of a Communication Service Deployment view provided by user interface 1100 in accordance with the techniques of the disclosure. In some examples, UI 106 of FIG. 1 generates user interface 1100 of FIG. 11 for display to a user.

For example, as depicted in FIG. 11, user interface 1100 depicts an icon 702 representing a network slice, which includes icons 704, 706, 708, and 710 arranged in a hierarchical fashion, each of which represents various elements and sub-elements that form the network slice. For example, the network slice represented by icon 702 includes one or more cloud providers, which are represented by one or more corresponding icons 704. Each cloud provider represented by a respective icon 704 includes one or more resource groups, which are represented by one or more corresponding icons 706. Each resource group represented by a respective icon 706 includes one or more resources, which are represented by one or more corresponding icons 708. Each resource represented by an icon 708 includes one or more nodes, such as one or more worker nodes or management nodes, which are represented by one or more corresponding icons 710.

The Communication Service Deployment view provided by user interface 1100 of FIG. 11 further depicts an "Events" window 1102 which depicts one or more events associated with the network slice represented by icon 702 for display to a user. The events may include, for example, a status, an operation state, a warning, or other information about the network slice.

FIG. 12 is a conceptual view of user interface 1200 for managing clouds and resources of a network slice, according to techniques of the disclosure. In some examples, UI 106 of FIG. 1 generates user interface 1200 of FIG. 12 for display to a user.

FIG. 12 depicts an example of an overview window for a network. The overview window provided by user interface 1200 depicts cloud details, workload information, SLA, alarms, etc. In some examples, a user may use the overview window to onboard new PNFs and manage existing instances. Additionally, the user may add or manage interdomain links in a workflow between two clouds via the overview screen. In some examples, the user interface provides a "Labels" window that enables a user to add or manage labels attached to clouds (not depicted in FIG. 12).

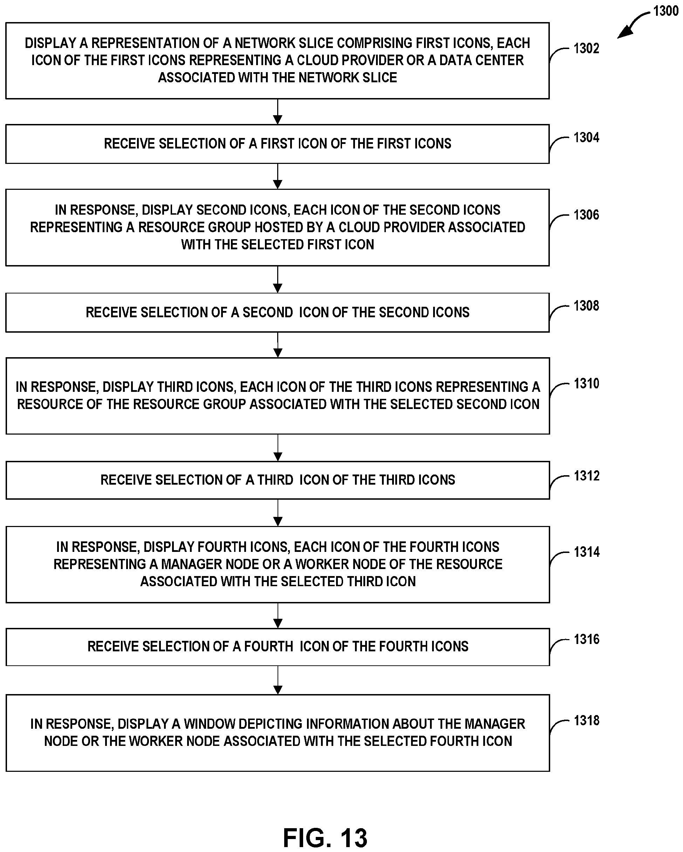

FIG. 13 is a flowchart illustrating an example operation in accordance with the techniques of the disclosure. FIG. 13 is described with respect to UI 106 of provisioning portal 104 and provisioning system 102 of network system 100 of FIG. 1, for convenience. However, some operations may be performed by components of client device 101 of FIG. 1.

FIG. 13 illustrates an example operation by which a user, such as an administrator, tenant, or other party, may use UI 106 to easily traverse (e.g., "drill down" through) an organizational hierarchy of elements and sub-elements of a network slice. For example, a network slice may be formed from multiple hierarchical elements and sub-elements, such as hierarchical groups of clouds, cloud providers, data centers, resource groups, resources, clusters, manager nodes, and worker nodes, etc. As depicted in the example of FIG. 13, a network slice includes one or more cloud providers or data centers. Each of the cloud providers or data centers includes one or more resource groups. Each resource group includes one or more resources. Furthermore, each resource may include one or more manager nodes or worker nodes. A cluster of logically-related nodes may include one or more worker nodes managed by one or more manager nodes.

A user may use UI 106 to easily identify elements or sub-elements of the network slice, such as clouds, cloud providers, data centers, resource groups, resources, clusters, manager nodes, and worker nodes, and obtain information, such as health and metrics information, about each element or sub-element of the network slice. For example, UI 106 of provisioning portal 104 displays a representation of a network slice comprising first icons (1302). Each icon of the first icons represents a cloud provider or a data center associated with the network slice. In some examples, each icon of the first icons represents a group of cloud providers or data centers associated with the network slice that are clustered together according to like criteria.

Provisioning portal 104 receives, via UI 106 and from a user, a selection of a first icon of the first icons (1304). In response to the selection, provisioning portal 104 displays, via UI 106, display second icons (1306). Each icon of the second icons represents a resource group hosted by a cloud provider associated with the selected first icon. In some examples, each icon of the second icons represents a group or a set of resource groups that are clustered together according to like criteria.

Optionally, a user may continue using UI 106 to perform additional operations to traverse lower hierarchical levels of the network slice. In the illustrated example, provisioning portal 104 optionally receives, via UI 106 and from the user, a selection of a second icon of the second icons (1308). In response, provisioning portal 104 displays, via UI 106, third icons (1310). Each icon of the third icons represents a resource of the resource group associated with the selected second icon. In some examples, each icon of the third icons represents multiple resources of the resource group that are clustered together according to like criteria. Therefore, such optional operations may allow a user to further descend the hierarchical elements of the network slice (or "drill down") to obtain more detailed information of the elements of the network slice.

Provisioning portal 104 receives, via UI 106 and from the user, a selection of a third icon of the third icons (1312). In response, provisioning portal 104 displays, via UI 106, fourth icons (1314). Each icon of the fourth icons represents one of a manager node or a worker node of the resource associated with the selected third icon. In some examples, each icon of the fourth icons represents multiple manager nodes or worker nodes of the resource that are clustered together according to like criteria.

Provisioning portal 104 receives, via UI 106 and from the user, a selection of a fourth icon of the fourth icons (1316). In response, provisioning portal 104 displays, via UI 106, a window depicting information about the one of the manager node or the worker node associated with the selected fourth icon (1318). In some examples, the information includes health or metrics information for the manager node or the worker node associated with the selected fourth icon.

As discussed above, a network slice may formed from a hierarchical group of elements and sub-elements. As described herein, these elements and sub-elements include clouds, cloud providers, data centers, resource groups, resources, clusters, manager nodes, and worker nodes. For example, a network slice may be formed by a combination of elements such as cloud providers and data centers. In turn, each cloud provider or data center may include multiple sub-elements, such as resource groups. Each resource group may include additional sub-elements, such as one or more resources or clusters. Furthermore, each resource or cluster may further include sub-elements such as one or more manager nodes or worker nodes.

In some examples, a user may cause UI 106 to display an icon representing a sub-element by selecting an icon representing an element. For example, in response to the user using a mouse to "left-click" an element, UI 106 may depict one or more sub-elements (e.g., a lower organizational level) that are associated with the element. In a similar manner, in response to the user using a mouse to "right-click" an element, UI 106 may depict an element (e.g., a higher organizational level) that are associated with one or more sub-elements.

For example, in response to a user "left-clicking" on an icon representing a network slice, UI 106 may display one or more cloud provider or data centers associated with the network slice. In response to a user "left-clicking" on an icon representing one or more cloud provider or data centers, UI 106 may display one or more resource groups associated with the respective cloud provider or data center. UI 106 may display resources associated with a resource group or one or more manager and worker nodes associated with a resource in a similar fashion.

As another example, in response to a user "right-clicking" on an icon representing a one or more manager and worker nodes, UI 106 may display one or more resources, including a resource associated with the one or more manager and worker nodes. In response to a user "right-clicking" on an icon representing a resource, UI 106 may display one or more resource groups, including a resource group associated with the resource. UI 106 may display a cloud provider or data center associated with a resource group or a network slice associated with a cloud provider or data center in a similar fashion. In this fashion, UI 106 may enable a user to easily traverse the hierarchical topology of a network slice.

Additionally, in some examples, a user may obtain information about the element depicted by UI 106 by hovering a cursor over the icon representing element. For example, with respect to FIG. 13, the user obtains information about the manager node or the worker node associated with the selected fourth icon by hovering a cursor over the fourth icon. In a similar fashion, the user may obtain information about a cloud provider or data center, a resource group, a resource, or a manager node or worker node by hovering a cursor over the icon representing a respective cloud provider or data center, a resource group, a resource, or a manager node or worker node.

The following examples may illustrate one or more aspects of the disclosure.

Example A1. A method comprising: displaying, by processing circuitry, a user interface comprising a first plurality of icons, each icon of the first plurality of icons representing a cloud provider or a data center associated with a network slice; receiving, by the processing circuitry and from a user, a selection of a first icon of the first plurality of icons; and responsive to the selection, displaying, by the processing circuitry, a second plurality of icons, each icon of the second plurality of icons representing a resource group hosted by a cloud provider associated with the first icon.

Example A2. The method of example A1, further comprising: receiving, by the processing circuitry and from a user, a selection of a second icon of the second plurality of icons; and responsive to the selection of the second icon, updating, by the processing circuitry, the user interface to display a third plurality of icons, each icon of the third plurality of icons representing a resource of the resource group associated with the second icon.

Example A3. The method of example A2, further comprising: receiving, by the processing circuitry and from a user, a selection of a third icon of the third plurality of icons; and responsive to the selection of the third icon, updating, by the processing circuitry, the user interface to display a fourth plurality of icons, each icon of the fourth plurality of icons representing one of a manager node or a worker node of the resource associated with the third icon.

Example A4. A system configured to perform the method of any of claims A1 through A3.

Example B1. A method comprising: applying, by processing circuitry, grouping logic to a plurality of elements associated with a network slice to group the plurality of elements into a plurality of groups, the plurality of groups being fewer than the plurality of elements; and displaying, by processing circuitry, a user interface comprising a plurality of icons, each icon of the plurality of icons representing a group of the plurality of groups.

Example B2. The method of example B1, wherein the plurality of elements comprise one or more of: a plurality of cloud providers or data centers; a plurality of resource groups; a plurality of resources; or a plurality of nodes.

Example B3. The method of any of examples B1 through B2, wherein applying the grouping logic comprises: receiving, by the processing circuitry and via the user interface, an input from a user specifying one or more parameters; and grouping, by the processing circuitry, the plurality of elements into the plurality of groups based on the one or more parameters.

Example B4. The method of any of examples B1 through B3, wherein applying the grouping logic comprises: applying, by the processing circuitry, a clustering algorithm to group the plurality of elements into a plurality of groups.

Example B5. A system configured to perform the method of any of claims B1 through B4.

Example C1. A method comprising: displaying, by processing circuitry, a user interface comprising a plurality of icons, each icon of the plurality of icons representing an element of a plurality of elements of a network slice; receiving, by the processing circuitry and from the user via the user interface, one or more criteria; filtering, by the processing circuitry, the plurality of elements based on the one or more criteria to obtain a subset of elements of the network slice; and controlling, by the processing circuitry, the user interface to display a subset of the plurality of icons corresponding to the subset of elements of the network slice.

Example C2. The method of example C1, wherein the one or more criteria comprise: a cloud provider to which the subset of elements belong; one or more tags assigned to the subset of elements; or a network slice for which the subset of elements are hosting one or more workloads.

Example C3. A system configured to perform the method of any of claims C1 through C2.

Example D1. The method of any of examples A1 through A3, B1 through B4, or C1 through C2, further comprising: receiving, by the processing circuitry and from the user via the user interface, a selection of a group of the plurality of groups; and controlling, by the processing circuitry, the user interface to display a window depicting information about the elements of the plurality of elements for the selected group.

Example D2. The method of example D1, wherein the information about the elements comprises at least one of: bandwidth or latency metrics for one or more links of the elements; or workload, storage, compute, or traffic throughput statistics for a cloud of the elements.

Example D3. The method of any of examples D1 through D2, further comprising controlling, by the processing circuitry, the user interface to display a statistics card window, the statistics card displaying information about one or more of: a total number of clouds hosting a workload of the network slice; a type of the clouds hosting the workload of the network slice; a protocol data unit (PDU) or a user equipment (UE) session supported by the network slice; a throughput for uplink and downlink directions of the network slice; or a status of a network slice subnet or a network function deployed for the network slice.

Example D4. A system configured to perform the method of any of claims D1 through D3.

Example E1. The method of any of examples A1 through A3, B1 through B4, C1 through C2, or D1 through D3, further comprising: receiving, by the processing circuitry, an input from a user via the user interface, the input comprising configuration information for a cloud; onboarding, by the processing circuitry, an instance of the cloud based on the configuration information.

Example E2. The method of example E1, further comprising: receiving, by the processing circuitry, a second input from the user via the user interface, the input specifying a second instance of a second cloud to be removed; removing, by the processing circuitry, the second instance of the second cloud based input.

Example E3. The method of any of examples E1 through E2, further comprising controlling, by the processing circuitry, the user interface to display a cloud management screen displaying statistics for the cloud.

Example E4. The method of any of examples E1 through E3, further comprising controlling, by the processing circuitry, the user interface to display a visualization of: an overview of the cloud; one or more physical network functions of the cloud; one or more inter-domain links to the cloud; one or more virtual local area networks (VLANs) of the cloud; or one or more labels assigned to the cloud.

Example E5. The method of any of examples E1 through E4, further comprising controlling, by the processing circuitry, the user interface to display a visualization of: severity information for the cloud; a service level agreement (SLA) for the cloud; or one or more traffic details of the cloud.

Example E6. A system configured to perform the method of any of claims E1 through E5.

The techniques described in this disclosure may be implemented, at least in part, in hardware, software, firmware or any combination thereof. For example, various aspects of the described techniques may be implemented within one or more programmable processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components or integrated within common or separate hardware or software components.

The techniques described in this disclosure may also be embodied or encoded in a computer-readable medium, such as a computer-readable storage medium, containing instructions. Instructions embedded or encoded in a computer-readable medium may cause a programmable processor, or other processor, to perform the method, e.g., when the instructions are executed. Computer-readable media may include non-transitory computer-readable storage media and transient communication media. Computer readable storage media, which is tangible and non-transitory, may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer-readable storage media. The term "computer-readable storage media" refers to physical storage media, and not signals, carrier waves, or other transient media.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

Thus, from one perspective, there has now been described an example network provisioning system. The network provisioning system displays a user interface comprising a first plurality of icons, each icon of the first plurality of icons representing a cloud provider or a data center associated with a network slice. The network provisioning system receives, via the user interface, a selection of a first icon of the first plurality of icons. Responsive to the selection of the first icon, the network provisioning system displays a second plurality of icons via the user interface. Each icon of the second plurality of icons represents a resource group hosted by a cloud provider or data center represented by the first icon. In some examples, the network slice is a 5G communication slice.

Further examples of feature combinations taught by the present disclosure are set out in the following numbered clauses:
1. A method comprising:
   displaying, by processing circuitry and via a user interface, a first plurality of icons, each icon of the first plurality of icons representing a cloud provider or a data center associated with a network slice;
   receiving, by the processing circuitry and via the user interface, a selection of a first icon of the first plurality of icons; and
   responsive to the selection of the first icon, displaying, by the processing circuitry and via the user interface, a second plurality of icons, each icon of the second plurality of icons representing a resource group hosted by the cloud provider or data center represented by the first icon.
2. The method of clause 1, further comprising:
   receiving, by the processing circuitry and via the user interface, a selection of a second icon of the second plurality of icons;
   responsive to the selection of the second icon, displaying, by the processing circuitry and via the user interface, a third plurality of icons, each icon of the third plurality of icons representing a resource of the resource group represented by the second icon;
   receiving, by the processing circuitry and via the user interface, a selection of a third icon of the third plurality of icons; and
   responsive to the selection of the third icon, displaying, by the processing circuitry and via the user interface, a fourth plurality of icons, each icon of the fourth plurality of icons representing one of a manager node or a worker node of the resource represented by the third icon.
3. The method of clause 1 or 2,
   wherein the network slice comprises a plurality of cloud providers or data centers, and
   wherein displaying the first plurality of icons comprises:
      applying grouping logic to the plurality of cloud providers or data centers to organize the plurality of cloud providers or data centers into sets of two or more cloud providers or data centers; and
      displaying the first plurality of icons, each icon of the first plurality of icons representing a set of the sets of two or more cloud providers or data centers.
4. The method of any preceding clause,
   wherein the cloud provider represented by the first icon hosts a plurality of resource groups, and
   wherein displaying the second plurality of icons comprises:
      applying grouping logic to the plurality of resource groups to organize the plurality of resource groups into sets of two or more resource groups; and
      displaying the second plurality of icons, each icon of the second plurality of icons representing a set of the sets of two or more resource groups.
5. The method of any preceding clause,
   wherein the cloud provider represented by the first icon hosts a plurality of resource groups, and
   wherein displaying the second plurality of icons comprises:
      receiving, via the user interface, one or more criteria;
      filtering the plurality of resource groups based on the one or more criteria to obtain a subset of resource groups hosted by the cloud provider; and
      displaying a subset of the second plurality of icons, each icon of the subset of the second plurality of icons representing a resource group of the subset of resource groups hosted by the cloud provider.
6. The method of any preceding clause, further comprising:
   receiving, by the processing circuitry and via the user interface, a selection of a second icon of the second plurality of icons; and
   displaying, by the processing circuitry and via the user interface, a window depicting information about a resource group represented by the second icon.
7. The method of clause 6, wherein the information about the resource group comprises at least one of:
   bandwidth or latency metrics for one or more links of the resource group; or
   workload, storage, compute, or traffic throughput statistics for the cloud provider hosting the resource group.
8. The method of any preceding clause, further comprising:
   receiving, by the processing circuitry and via the user interface, an input specifying configuration information for a cloud; and
   onboarding, by the processing circuitry, an instance of the cloud based on the configuration information.
9. The method of clause 8, further comprising displaying, by the processing circuitry and via the user interface, a visualization of one or more of:
   an overview of the cloud;
   one or more physical network functions of the cloud;
   one or more inter-domain links to the cloud;
   one or more virtual local area networks (VLANs) of the cloud; or
   one or more labels assigned to the cloud.
10. The method of any preceding clause, further comprising:
   receiving, by the processing circuitry and via the user interface, an input specifying an instance of a cloud to be removed; and
   responsive to the input, removing, by the processing circuitry, the instance of the cloud.
11. The method of clause 10, further comprising displaying, by the processing circuitry and via the user interface, a visualization of one or more of:
   severity information for the cloud;
   a service level agreement (SLA) for the cloud; or
   one or more traffic details of the cloud.
12. A computing system comprising processing circuitry having access to a memory, the processing circuitry configured to:
   display, via a user interface, a first plurality of icons, each icon of the first plurality of icons representing a cloud provider or a data center associated with a network slice;
   receive, via the user interface, a selection of a first icon of the first plurality of icons; and
   responsive to the selection of the first icon, display, via the user interface, a second plurality of icons, each icon of the second plurality of icons representing a resource group hosted by the cloud provider or data center represented by the first icon.
13. The system of any preceding clause, wherein the processing circuitry is further configured to:
   receive, via the user interface, a selection of a second icon of the second plurality of icons;
   responsive to the selection of the second icon, display, via the user interface, a third plurality of icons,
   each icon of the third plurality of icons representing a resource of the resource group represented by the second icon;
   receive, via the user interface, a selection of a third icon of the third plurality of icons; and
   responsive to the selection of the third icon, display, via the user interface, a fourth plurality of icons, each icon of the fourth plurality of icons representing one of a manager node or a worker node of the resource represented by the third icon.
14. The system of any preceding clause,
   wherein the network slice comprises a plurality of cloud providers or data centers, and
   wherein to display the first plurality of icon, the processing circuitry is configured to:
      apply grouping logic to the plurality of cloud providers or data centers to organize the plurality of cloud providers or data centers into sets of two or more cloud providers or data centers; and
      display the first plurality of icons, each icon of the first plurality of icons representing a set of the sets of two or more cloud providers or data centers.
15. The system of any preceding clause,
   wherein the cloud provider associated with the first icon hosts a plurality of resource groups, and
   wherein to display the second plurality of icon, the processing circuitry is configured to:
      apply grouping logic to the plurality of resource groups to organize the plurality of resource groups into sets of two or more resource groups; and
      display the second plurality of icons, each icon of the second plurality of icons representing a set of the sets of two or more resource groups.
16. The system of any preceding clause,
   wherein the cloud provider associated with the first icon hosts a plurality of resource groups, and
   wherein to display the first plurality of icon, the processing circuitry is configured to:
      receive, via the user interface, one or more criteria;
      filter the plurality of resource groups based on the one or more criteria to obtain a subset of resource groups hosted by the cloud provider; and
      display a subset of the second plurality of icons, each icon of the subset of the second plurality of icons representing a resource group of the subset of resource groups hosted by the cloud provider.
17. The system of any preceding clause, wherein the processing circuitry is further configured to:
   receive, via the user interface, a selection of a second icon of the second plurality of icons; and
   display, via the user interface, a window depicting information about a resource group represented by the second icon.
18. The system of any preceding clause, wherein the processing circuitry is further configured to:
   receive, via the user interface, an input specifying configuration information for a cloud; and
   onboard an instance of the cloud based on the configuration information.
19. The system of any preceding clause, wherein the processing circuitry is further configured to:
   receive, via the user interface, an input specifying an instance of a cloud to be removed; and
   responsive to the input, remove the instance of the cloud.
20. A method comprising:
   displaying, by processing circuitry and via a user interface, a representation of a network slice comprising first icons, each icon of the first icons representing a cloud provider or a data center associated with the network slice;
   responsive to a selection of a first icon of the first icons, displaying, by the processing circuitry and via the user interface, second icons, each icon of the second icons representing a resource group hosted by the cloud provider or data center represented by the selected first icon;
   responsive to a selection of a second icon of the second icons, displaying, by the processing circuitry and via the user interface, third icons, each icon of the third icons representing a resource of the resource group represented by the selected second icon;
   responsive to a selection of a third icon of the third icons, displaying, by the processing circuitry and via the user interface, fourth icons, each icon of the fourth icons representing one of a manager node or a worker node of the resource represented by the selected third icon; and
   responsive to a selection of a fourth icon of the fourth icons, displaying, by the processing circuitry and via the user interface, information about the one of the manager node or the worker node represented by the selected fourth icon.

## Claims

1. A computing system comprising processing circuitry having access to a memory, the processing circuitry configured to:
display, via a user interface, a first plurality of icons, each icon of the first plurality of icons representing a cloud provider or a data center associated with a network slice;
receive, via the user interface, a selection of a first icon of the first plurality of icons; and
responsive to the selection of the first icon, display, via the user interface, a second plurality of icons, each icon of the second plurality of icons representing a resource group hosted by the cloud provider or data center represented by the first icon.

2. The system of claim 1, wherein the processing circuitry is further configured to:
receive, via the user interface, a selection of a second icon of the second plurality of icons;
responsive to the selection of the second icon, display, via the user interface, a third plurality of icons, each icon of the third plurality of icons representing a resource of the resource group represented by the second icon;
receive, via the user interface, a selection of a third icon of the third plurality of icons; and
responsive to the selection of the third icon, display, via the user interface, a fourth plurality of icons, each icon of the fourth plurality of icons representing one of a manager node or a worker node of the resource represented by the third icon.

3. The system of claim 1 or 2,
wherein the network slice comprises a plurality of cloud providers or data centers, and
wherein to display the first plurality of icon, the processing circuitry is configured to:
apply grouping logic to the plurality of cloud providers or data centers to organize the plurality of cloud providers or data centers into sets of two or more cloud providers or data centers; and
display the first plurality of icons, each icon of the first plurality of icons representing a set of the sets of two or more cloud providers or data centers.

4. The system of any of claims 1 to 3,
wherein the cloud provider associated with the first icon hosts a plurality of resource groups, and
wherein to display the second plurality of icon, the processing circuitry is configured to:
apply grouping logic to the plurality of resource groups to organize the plurality of resource groups into sets of two or more resource groups; and
display the second plurality of icons, each icon of the second plurality of icons representing a set of the sets of two or more resource groups.

5. The system of any of claims 1 to 4,
wherein the cloud provider associated with the first icon hosts a plurality of resource groups, and
wherein to display the first plurality of icon, the processing circuitry is configured to:
receive, via the user interface, one or more criteria;
filter the plurality of resource groups based on the one or more criteria to obtain a subset of resource groups hosted by the cloud provider; and
display a subset of the second plurality of icons, each icon of the subset of the second plurality of icons representing a resource group of the subset of resource groups hosted by the cloud provider.

6. The system of any of claims 1 to 5, wherein the processing circuitry is further configured to:
receive, via the user interface, a selection of a second icon of the second plurality of icons; and
display, via the user interface, a window depicting information about a resource group represented by the second icon.

7. The system of claim 6, wherein the information about the resource group comprises at least one of:
bandwidth or latency metrics for one or more links of the resource group; or
workload, storage, compute, or traffic throughput statistics for the cloud provider hosting the resource group.

8. The system of any of claims 1 to 7, wherein the processing circuitry is further configured to:
receive, via the user interface, an input specifying configuration information for a cloud; and
onboard an instance of the cloud based on the configuration information.

9. The system of any of claims 1 to 8, wherein the processing circuitry is further configured to display, via the user interface, a visualization of one or more of:
an overview of the cloud;
one or more physical network functions of the cloud;
one or more inter-domain links to the cloud;
one or more virtual local area networks, VLANs, of the cloud; or
one or more labels assigned to the cloud.

10. The system of any of claims 1 to 9, wherein the processing circuitry is further configured to:
receive, via the user interface, an input specifying an instance of a cloud to be removed; and
responsive to the input, remove the instance of the cloud.

11. The system of claim 10, wherein the processing circuitry is further configured to display, via the user interface, a visualization of one or more of:
severity information for the cloud;
a service level agreement, SLA, for the cloud; or
one or more traffic details of the cloud.

12. A method as performed by the computing system of any of claims 1 to 11.

13. A computer readable medium comprising computer-implementable instructions for causing a computer to become configured as the system of any of claims 1 to 11.
